(19) Europäisches Patentamt
European Patent Office
Office européen des brevets

(11) **EP 4 507 036 A1**

(12) **EUROPEAN PATENT APPLICATION**
published in accordance with Art. 153(4) EPC

(43) Date of publication:
**12.02.2025 Bulletin 2025/07**

(21) Application number: **23778952.4**

(22) Date of filing: **15.02.2023**

(51) International Patent Classification (IPC):
*H01M 4/58* (2010.01)   *C01B 33/113* (2006.01)
*C01B 33/32* (2006.01)   *H01M 4/36* (2006.01)

(52) Cooperative Patent Classification (CPC):
**C01B 33/113; C01B 33/32; H01M 4/36; H01M 4/58;**
**Y02E 60/10**

(86) International application number:
**PCT/JP2023/005085**

(87) International publication number:
**WO 2023/188918 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **01.04.2022 JP 2022061799**

(71) Applicant: **SHIN-ETSU CHEMICAL CO., LTD.**
**Tokyo 1000005 (JP)**

(72) Inventors:
 • **HIROSE, Takakazu**
   **Annaka-shi, Gunma 379-0125 (JP)**
 • **MURAYAMA, Masaki**
   **Annaka-shi, Gunma 379-0125 (JP)**
 • **TAKAHASHI, Kohta**
   **Annaka-shi, Gunma 379-0125 (JP)**
 • **OSAWA, Yusuke**
   **Annaka-shi, Gunma 379-0125 (JP)**
 • **ISHIKAWA, Takuya**
   **Annaka-shi, Gunma 379-0125 (JP)**
 • **OTOSAKA, Tetsuya**
   **Annaka-shi, Gunma 379-0125 (JP)**

(74) Representative: **Sonnenhauser, Thomas Martin**
**Wuesthoff & Wuesthoff**
**Patentanwälte und Rechtsanwalt PartG mbB**
**Schweigerstraße 2**
**81541 München (DE)**

(54) **NEGATIVE ELECTRODE ACTIVE SUBSTANCE AND METHOD FOR PRODUCING NEGATIVE ELECTRODE ACTIVE SUBSTANCE**

(57)    The present invention is a negative electrode active material containing negative electrode active material particles, in which the negative electrode active material particles include silicon compound particles containing Li silicate, an intermediate layer coating a surface of the silicon compound particles, the intermediate layer containing a Li compound different from Li silicate, being adjacent to a portion of the surface of the silicon compound particles, and/or a metal oxide and/or a metal hydroxide, being adjacent to at least a portion of the surface of the silicon compound particles, and an outermost carbon layer coating the intermediate layer. This can provide the negative electrode active material that can improve initial efficiency to increase battery capacity, and increase stability during the mass production of the slurry while realizing sufficient battery cycle characteristics.

[FIG. 1]

**Description**

TECHNICAL FIELD

The present invention relates to a negative electrode active material and a method for producing a negative electrode active material.

BACKGROUND ART

In recent years, small electronic devices, typically mobile devices, have become widespread and are being strongly required to further reduce their size and weight and increase their service life. In order to address such market needs, in particular, the development of secondary batteries that are small and lightweight and yet can provide a high energy density is being progressed. These secondary batteries are contemplated to find application not only in small electronic devices but also in large electronic devices, typically automobiles, as well as power storage systems as typified by houses.

In particular, lithium-ion secondary batteries hold great promise because it is easy to make them smaller and increase their capacity and because they also have a higher energy density than that of lead batteries or nickel-cadmium batteries.

The above lithium-ion secondary battery includes positive and negative electrodes, a separator, and an electrolyte liquid. The negative electrode contains a negative electrode active material involved in charge-and-discharge reactions.

While carbon-based active materials are widely used as the negative electrode active material, recent market needs have called for further improvement in the battery capacity. The use of silicon as a negative electrode active material has been contemplated to improve the battery capacity. This is because silicon has a theoretical capacity (4199 mAh/g) that is more than ten times greater than that of graphite (372 mAh/g) and is thus anticipated to significantly improve the battery capacity. The development of silicon materials for use as negative electrode active materials under contemplation not only includes a simple substance of silicon but also their alloys as well as their compounds as typified by oxides. A form of the active material is investigated from an applying type, which is standard in the carbon-based active material, to an integrated type in which the active material is directly deposited on a current collector.

The use of silicon as a main material of a negative electrode active material, however, expands or shrinks the negative electrode active material during charge-and-discharge, making the negative electrode active material prone to cracking particularly near its surface layer. In addition, ionic substances are generated inside the active material, which renders this negative electrode active material cracking-prone. Any cracking of the surface layer of the negative electrode active material will create a new surface, increasing the reaction area of the active material. A decomposition reaction of an electrolyte liquid occurs on this new surface, and the new surface is coated with a decomposition product of the electrolyte liquid so that the electrolyte liquid is consumed. This often leads to degradation in cycle characteristics.

Various investigations into lithium-ion secondary battery negative electrode materials and electrode configurations employing a silicon material as a main material have been made in order to improve the initial battery efficiency and cycle characteristics.

Specifically, a vapor deposition method is used to simultaneously deposit silicon and amorphous silicon dioxide in order to provide good cycle characteristics and high safety (see, e.g., Patent Document 1). Also, a carbon material (electronic conductor) is disposed on a surface of silicon oxide particles in order to provide a high battery capacity and high safety (see, e.g., Patent Document 2). Further, in order to improve cycle characteristics and provide higher input/output characteristics, an active material containing silicon and oxygen is produced, and an active material layer with a higher ratio of oxygen near a current collector is formed (see, e.g., Patent Document 3). Further, in order to improve cycle characteristics, a silicon active material is formed such that it contains oxygen at an average oxygen content of 40 at% or less, with a higher oxygen content near a current collector (see, e.g.,

Patent Document 4).

Further, a nanocomposite containing Si-phase, $SiO_2$, and $M_yO$ metal oxide is used to improve the initial charge-and-discharge efficiency (see, e.g., Patent Document 5). Further, $SiO_x$ ($0.8 \leq x \leq 1.5$; the range of particle size: 1 $\mu$m to 50 $\mu$m) and a carbon material are mixed and fired at a high temperature to improve cycle characteristics (see, e.g., Patent Document 6). Further, in order to improve cycle characteristics, an active material is controlled to have an oxygen-to-silicon molar ratio in the negative electrode active material within the range of 0.1 to 1.2 such that a difference between the maximum and minimum molar ratios near the interface between the active material and a current collector is 0.4 or less (see, e.g., Patent Document 7). Further, lithium-containing metal oxide is used to improve battery load characteristics (see, e.g., Patent Document 8). Further, a hydrophobic layer such as one made of a silane compound is formed on the surface of a silicon material to improve cycle characteristics (see, e.g., Patent Document 9). Further, silicon oxide is used and a graphite coating is formed on its surface layer to provide electric conductivity for improved cycle characteristics (see, e.g.,

Patent Document 10). In Patent Document 10, a Raman spectrum of the graphite coating exhibits broad peaks at shift values of 1330 cm$^{-1}$ and 1580 cm$^{-1}$, and their intensity ratio $I_{1330}/I_{1580}$ satisfies $1.5 < I_{1330}/I_{1580} < 3$. Further, particles having a silicon microcrystal phase dispersed in silicon dioxide are used to provide a high battery capacity and improved cycle characteristics (see, e.g., Patent Document 11). Further, silicon oxide with a controlled silicon-to-oxygen atomic ratio of 1 : y (0 < y < 2) is used to improve overcharge-and-overdischarge characteristics (see, e.g., Patent Document 12).

As a lithium-ion secondary battery using silicon oxide, Hitachi Maxell, Ltd. started to ship a prismatic secondary battery for a smartphone that adopted a nano-silicon composite in June, 2010 (see, e.g., Non Patent Document 1). Silicon oxide proposed by Hohl is a composite material with $Si^{0+}$ to $Si^{4+}$, which has various oxidation states (see Non Patent Document 2). Kapaklis proposes a disproportionation structure that is to be separated into Si and $SiO_2$ by applying thermal load to silicon oxide (see Non Patent Document 3). Miyachi et al. pay attention to Si and $SiO_2$, which contribute to charge-and-discharge, among the silicon oxides having the disproportionation structure (see Non Patent Document 4), and Yamada et al. propose a formula of a reaction between the silicon oxide and Li as follows (see Non Patent Document 5).

$$2SiO(Si+SiO_2) + 6.85Li^+ + 6.85e^- \rightarrow 1.4Li_{3.75}Si + 0.4Li_4SiO_4 + 0.2SiO_2$$

The above reaction formula indicates that Si and $SiO_2$ constituting silicon oxide react with Li to be separated into a Li silicide and a Li silicate, and partially unreacted $SiO_2$.

The generated Li silicate, which is an irreversible component, is considered to be a stable substance not releasing Li after once formed. A capacity per weight calculated from this reaction formula has a value close to an experimental value, and this reaction formula is recognized as a reaction mechanism of silicon oxide. Kim et al. identify the Li silicate, which is the irreversible component generated with charge-and-discharge of silicon oxide, as $Li_4SiO_4$ by using $^7$Li-MAS-NMR and $^{29}$Si-MAS-NMR (see Non Patent Document 6).

This irreversible capacity is the weakest point of silicon oxide, and improvement is required. Accordingly, Kim et al. produce a negative electrode, which has remarkably improved initial efficiency as a battery and is practically usable, by using a Li pre-doping method to form the Li silicate in advance (see Non Patent Document 7).

There was also a proposed method of treating a powder, not Li-doping the electrode, to achieve the improvement of the irreversible capacity (see Patent Document 13).

Moreover, in order to improve water repellency of an obtained Li-doped material, an $AlO_x$ coating is applied on an upper layer portion of a C layer by using Al isopropoxide as a material (see Patent Document 14).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A
Patent Document 14: JP 2017-10645 A

NON PATENT LITERATURE

Non Patent Document 1: Battery Association of Japan, Newsletter "Denchi (battery)", May 1, 2010, p. 10
Non Patent Document 2: A. Hohl, T. Wieder, P. A. van Aken, T. E. Weirich, G. Denninger, M. Vidal, S. Oswald, C. Deneke, J. Mayer, and H. Fuess: J. Non-Cryst. Solids, 320, (2003), 255.

Non Patent Document 3: V. Kapaklis, J. Non-Crystalline Solids, 354 (2008) 612

Non Patent Document 4: Mariko Miyachi, Hironori Yamamoto, and Hidemasa Kawai, J. Electrochem. Soc. 2007 volume 154, issue 4, A376-A380

Non Patent Document 5: M. Yamada, M. Inaba, A. Ueda, K. Matsumoto, T. Iwasaki, T. Ohzuku, J.Electrochem. Soc., 159, A1630 (2012)

Non Patent Document 6: Taeahn Kim, Sangjin Park, and Seung M. Oh, J. Electrochem. Soc. volume 154, (2007), A1112-A1117.

Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.

## SUMMARY OF INVENTION

### TECHNICAL PROBLEM

As described above, small electronic devices, represented by mobile terminals, have been advancing recently toward high performance and multifunction, and a lithium-ion secondary battery, which is the main electric source thereof, is required to increase battery capacity. As a solution to this problem, development of a lithium-ion secondary battery, including a negative electrode using silicon material as the main material, is desired. Moreover, such a lithium-ion secondary battery using silicon material is desired to have initial charge-and-discharge characteristics and cycle characteristics almost equivalent to those of a lithium-ion secondary battery using a carbon-based active material. Under this circumstance, the cycle characteristics and the initial charge-and-discharge characteristics have been improved by using, as a negative electrode active material, modified (Li doped) silicon oxide by inserting Li and desorbing a part of inserted Li. However, the Li-inserted negative electrode material has caused various problems such as a decrease in a viscosity of a binder (thickener) due to a partial elution of a Li component into a slurry when such a negative electrode material is used for the slurry in an electrode production step.

As a response to these problems, a study has been made to coat an outermost surface of Li-doped SiO/C with an $AlO_x$ layer (Patent Document 14); however, shearing force was applied during stirring in slurring so that the layer was delaminated, resulting in halving an effect of the coating. In particular, when the slurry is made using a small apparatus with a capacity of a few liters, the shearing force is small and no problem is observed; however, when went into a mass production using a production apparatus with a capacity exceeding this, it is found that slurry stability cannot be maintained for two days.

The present invention has been made in view of the above-described problem. An object of the present invention is to provide a negative electrode active material capable of improving initial efficiency to increase battery capacity and increasing stability during mass production of slurry while realizing sufficient battery cycle characteristics and to provide a production method that can produce such a negative electrode active material.

### SOLUTION TO PROBLEM

To solve the above problem, the present invention provides a negative electrode active material containing negative electrode active material particles,
wherein the negative electrode active material particles comprise:

silicon compound particles containing Li silicate;
an intermediate layer coating a surface of the silicon compound particles, the intermediate layer containing

a Li compound different from Li silicate, being adjacent to a portion of the surface of the silicon compound particles, and/or
a metal oxide and/or a metal hydroxide, being adjacent to at least a portion of the surface of the silicon compound particles; and

an outermost carbon layer coating the intermediate layer.

The inventive negative electrode active material contains the negative electrode active material particles containing the silicon compound particles containing the Li silicate; therefore, battery capacity can be improved.

Moreover, in the inventive negative electrode active material; the silicon compound particles contain the Li silicate; the surface of the silicon compound particles is coated with the intermediate layer; and then the intermediate layer contains the Li compound different from Li silicate, being adjacent to a portion of the surface of the silicon compound particles, and/or the metal oxide and/or the metal hydroxide, being adjacent to at least a portion of the surface of the silicon compound particles; the intermediate layer is coated with the outermost carbon layer that provides conductivity; consequently, excellent Li diffusibility and conductivity in the bulk can be obtained while improving the stability during mass production of the slurry. By improving Li diffusibility, initial efficiency, battery cycle characteristics, and input characteristics can be improved.

As a result of these, the inventive negative electrode active material can improve the initial efficiency to increase the battery capacity and increase stability during the mass production of the slurry while realizing sufficient battery cycle characteristics.

It is preferred that the silicon compound particles contain, at least in a part, at least one selected from the group consisting of $Li_2SiO_3$, $Li_4SiO_4$, and $Li_6Si_2O_7$ as the Li silicate.

This can reduce irreversible capacity generated during charge because $SiO_2$ component portion in the silicon compound particles, which becomes unstable during inserting and desorbing lithium at charge-and-discharge of the battery, is modified into another lithium silicate in advance.

It is preferred that the intermediate layer contains the Li compound, and the Li compound is a composite compound containing Li, C, and O.

The composite compound containing Li, C, and O has excellent Li permeability. Consequently, Li diffusibility can be further improved by containing such a Li compound in the intermediate layer. The initial efficiency, the battery cycle characteristics, and the input characteristics can be further improved by further improving the Li diffusibility.

In this case, for example, the composite compound containing Li, C, and O has an O-C=O structure, at least in a part, in a C1s waveform obtained by an XPS spectrum.

The composite compound containing Li, C, and O may have, for example, at least in a part, the O-C=O structure.

It is preferred that the intermediate layer contains the metal oxide and/or the metal hydroxide, and the metal oxide and/or the metal hydroxide contains at least one element selected from the group consisting of aluminum, magnesium, titanium, zirconium, calcium, and niobium.

When the intermediate layer that coats the surface of the silicon compound particles contains such cation, excellent adhesiveness and excellent water resistance can be more reliably exhibited.

In this case, the metal oxide and/or the metal hydroxide in the intermediate layer preferably has a thickness of 0.1 nm or more and 10 nm or less.

When the thickness of the metal oxide and/or the metal hydroxide in the intermediate layer is within this range, the film thickness can be controlled easily, and sufficient Li permeability can be exhibited.

It is preferred that the intermediate layer contains the Li compound and the metal oxide and/or the metal hydroxide, and the metal oxide and/or the metal hydroxide coats the Li compound.

The metal oxide and/or the metal hydroxide can exhibit better water resistance. In addition, the Li compound different from the Li silicate does not have such high water resistance but has excellent Li permeability. Consequently, when the negative electrode active material contains the negative electrode active material particles containing the intermediate layer in which both the Li compound different from the Li silicate and the metal oxide and/or the metal hydroxide are contained and the Li compound different from the Li silicate is coated with the metal oxide and/or the metal hydroxide; better Li diffusibility in bulk can be exhibited while further improving stability during the mass production of the slurry.

It is preferred that before the negative electrode active material particles are charged and discharged, the negative electrode active material particles have a peak attributed to a Si (111) crystal plane obtained by X-ray diffraction using Cu-K$\alpha$ rays, a crystallite size corresponding to the crystal plane is 5.0 nm or less, and a ratio A/B of an intensity A of the peak attributed to the Si (111) crystal plane relative to an intensity B of a peak attributed to a $Li_2SiO_3$ (111) crystal plane satisfies the following formula (1).

$$0.4 \leq A/B \leq 1.0 \qquad \cdots (1)$$

According to a negative electrode active material containing such negative electrode active material particles, high battery capacity can be realized while reducing the irreversible capacity.

The negative electrode active material particles preferably have a median diameter of 4.5 $\mu$m or more and 15 $\mu$m or less.

When the median diameter of the negative electrode active material particles is within this range, promotion of the reaction with the electrolyte liquid can be prevented, and failure of electron contacting due to the expansion of the active material accompanied by charge-and-discharge can be prevented.

Moreover, the present invention provides a method for producing negative electrode active material containing negative electrode active material particles, the method comprising the steps of:

producing silicon oxide particles represented by a general formula $SiO_x$ ($0.5 \leq x \leq 1.6$);
producing silicon compound particles containing Li silicate by inserting Li into the silicon oxide particles;

forming an intermediate layer on a surface of the silicon compound particles, the intermediate layer containing

a Li compound different from Li silicate, being adjacent to a portion of the surface of the silicon compound particles, and/or
a metal oxide and/or a metal hydroxide, being adjacent to at least a portion of the surface of the silicon compound particles;

forming an outermost carbon layer coating the intermediate layer to obtain negative electrode active material particles; and
using the negative electrode active material particles to produce a negative electrode active material.

The negative electrode active material produced by such a production method contains the negative electrode active material particles containing the silicon compound particles containing Li silicate, and thus the battery capacity can be improved.

Moreover, in the negative electrode active material produced by such a production method, the silicon compound particles contain the Li silicate; the surface of the silicon compound particles is coated with the intermediate layer; the intermediate layer contains the Li compound different from the Li silicate, being adjacent to a portion of the surface of the silicon compound particles, and/or the metal oxide and/or the metal hydroxide, being adjacent to at least a portion of the surface of the silicon compound particles; and the intermediate layer is coated with the outermost carbon layer providing the conductivity; thus excellent Li diffusibility and conductivity in bulk can be obtained while improving stability during mass production of the slurry. By improving the Li diffusibility, the initial efficiency, the battery cycle characteristics, and the input characteristics can be improved.

As a result of these, the negative electrode active material produced by the inventive method for producing a negative electrode active material can improve the initial efficiency to increase the battery capacity, and then the stability during the mass production of the slurry can be improved while realizing the sufficient battery cycle characteristics.

It is preferred that in the step of producing the silicon compound particles containing the Li silicate, the silicon compound particles containing the Li compound on the surface are produced, and
in the step of forming the intermediate layer,
a portion of the Li compound existing on the surface of the silicon compound particles is removed, and then a portion of the surface of the silicon compound particles and a surface of the Li compound are coated with the metal oxide and/or the metal hydroxide, thereby forming the intermediate layer containing the metal oxide and/or the metal hydroxide and the Li compound.

According to the method for producing a negative electrode active material in this preferable aspect, the negative electrode active material can be produced, in which the intermediate layer contains both the Li compound different from the Li silicate and the metal oxide and/or the metal hydroxide and the Li compound is coated with the metal oxide and/or the metal hydroxide.

The metal oxide and/or the metal hydroxide can exhibit better water resistance. Moreover, the Li compound different from the Li silicate does not have such high water resistance but has excellent Li permeability. Accordingly, according to the production method in this preferable aspect, the negative electrode active material that exhibits better Li diffusibility in the bulk can be produced while further improving the stability during the mass production of the slurry.

In this case, for example, in the step of forming the intermediate layer, the metal oxide and/or the metal hydroxide can be formed by hydrolysis and dehydration-condensation of a metal alkoxide.

The metal oxide and/or the metal hydroxide can be, for example, formed by hydrolysis and dehydration-condensation of the metal alkoxide.

ADVANTAGEOUS EFFECTS OF INVENTION

As described above, the inventive negative electrode active material can improve the initial efficiency to increase the battery capacity and can increase the stability during the mass production of the slurry while realizing sufficient battery cycle characteristics.

Moreover, according to the inventive method for producing a negative electrode active material, the negative electrode active material can be produced, in which the initial efficiency can be improved to increase the battery capacity and the high stability during the mass production of the slurry can be exhibited while realizing sufficient battery cycle characteristics.

BRIEF DESCRIPTION OF DRAWINGS

FIG. 1 is a schematic partial sectional view of a negative electrode active material particle contained in an example of a negative electrode active material according to the present invention.

FIG. 2 is a schematic partial sectional view of a negative electrode active material particle contained in another example of a negative electrode active material according to the present invention.

FIG. 3 is a schematic partial sectional view of a negative electrode active material particle contained in still another example of a negative electrode active material according to the present invention.

FIG. 4 is a schematic cross-sectional view showing an example of a structure of a negative electrode containing a negative electrode active material according to the present invention.

FIG. 5 is an exploded view illustrating a structure example of a lithium-ion secondary battery (laminate film type) provided with a negative electrode containing a negative electrode active material according to the present invention.

FIG. 6 is a schematic partial sectional view of a negative electrode active material particle contained in a negative electrode active material in Comparative Example 4.

FIG. 7 is a part of an XPS spectrum after six times etchings of negative electrode active material particles contained of a negative electrode active material in Example 16.

FIG. 8 is each part of an XPS spectrum and an XPS spectrum after three times etching on an outermost surface of negative electrode active material particles of a negative electrode active material of Example 1.

DESCRIPTION OF EMBODIMENTS

As described above, as one method for increasing battery capacity of a lithium-ion secondary battery, the use of a negative electrode with silicon oxide as a main material has been studied for the negative electrode of the lithium-ion secondary battery. The lithium-ion secondary battery using this silicon oxide is desired to exhibit initial charge-and-discharge characteristics that are almost equivalent to those of the lithium-ion secondary battery using carbon-based active material. In Li-doped SiO capable of improving the initial charge-and-discharge characteristics, cycle characteristics almost equivalent to a carbon-based active material are desired. However, the negative electrode active material that can satisfy a pot-life of slurry when mass-producing slurry has not yet been proposed.

Under these circumstances, the present inventors have earnestly studied to obtain the negative electrode active material that has excellent handling properties, obtains high cycle characteristics, and improves initial charge-and-discharge characteristics, consequently capable of increasing a battery capacity, when used for a negative electrode active material of a secondary battery. As a result, the present inventors have found out that: by coating a surface of silicon compound particles containing Li silicate with an intermediate layer containing a Li compound different from Li silicate, being adjacent to a portion of the surface of the silicon compound particles, and/or a metal oxide and/or a metal hydroxide, being adjacent to at least a portion of the surface of the silicon compound particles; and by coating the intermediate layer with an outermost carbon layer providing conductivity; excellent Li diffusibility and conductivity in a bulk can be obtained while improving the stability during the mass production of the slurry. This finding has led to the completion of the present invention.

That is, the present invention is a negative electrode active material containing negative electrode active material particles,

wherein the negative electrode active material particles comprise:

silicon compound particles containing Li silicate;
an intermediate layer coating a surface of the silicon compound particles, the intermediate layer containing

a Li compound different from Li silicate, being adjacent to a portion of the surface of the silicon compound particles, and/or
a metal oxide and/or a metal hydroxide, being adjacent to at least a portion of the surface of the silicon compound particles; and

an outermost carbon layer coating the intermediate layer.

In addition, the present invention also provides a method for producing negative electrode active material containing negative electrode active material particles, the method comprising the steps of:

producing silicon oxide particles represented by a general formula $SiO_x$ ($0.5 \leq x \leq 1.6$);
producing silicon compound particles containing Li silicate by inserting Li into the silicon oxide particles;
forming an intermediate layer on a surface of the silicon compound particles, the intermediate layer containing,

a Li compound different from Li silicate, being adjacent to a portion of the surface of the silicon compound particles, and/or
a metal oxide and/or a metal hydroxide, being adjacent to at least a portion of the surface of the silicon compound particles;

forming an outermost carbon layer coating the intermediate layer to obtain negative electrode active material particles; and
using the negative electrode active material particles to produce a negative electrode active material.

Hereinafter, the present invention will be described in detail. However, the present invention is not limited thereto.

\<Negative Electrode Active Material\>

The inventive negative electrode active material (hereinafter, also referred to as a silicon-based negative electrode active material) contains the negative electrode active material particles (hereinafter, also referred to as the silicon-based negative electrode active material particles) containing the silicon compound particles, thus the battery capacity can be improved.

Moreover, by forming the Li silicate at least a portion of the silicon compound particles, stabilization of the slurry is enabled before application, excellent electrodes can be obtained by using stable slurry, and battery characteristics are improved. However, it has been found that such a slurry lacks sufficient long-term preservability, and the formed Li silicate slowly dissolves in the slurry over time.

When the Li silicate is formed, for example, by applying heat load to the Li silicate, a crystal phase of the Li silicate is overgrown, by which elution of a Li component into the slurry can be reduced, but at the same time, the crystallinity of Si becomes high. A generation of Si having such a high crystallinity can be a factor to significantly decrease battery characteristics.

Moreover, when the Li silicate phase is overgrown, the diffusibility of Li is significantly decreased and the battery characteristics are degraded.

Under these circumstances, when the crystalline phase of the Li silicate is made as small as possible, and Si crystallization and overgrowth of the Li silicate phase are suppressed, the Li silicate phase that slowly elutes in water is generated.

As a result, satisfactory results in the battery characteristics can be obtained. However, the slurry needs to be applied promptly following the slurry production, because a long leaving time makes the binder degrade and the battery characteristics deteriorate during an electrode-producing step, in particular, during the slurry production.

Accordingly, by coating the surface of the silicon compound particles containing the Li silicate with the intermediate layer containing the Li compound different from the Li silicate, being adjacent to a portion of the surface of the silicon compound particles, and/or the metal oxide and/or the metal hydroxide, being adjacent to at least a portion of the surface of the silicon compound particles, and by coating the intermediate layer with the outermost carbon layer providing conductivity, the present inventors have developed a material that can obtain excellent Li diffusibility in the bulk while improving the stability during mass-producing the slurry.

In the inventive negative electrode active material, the silicon compound particles contain the Li silicate; the surface of the silicon compound particles is coated with the intermediate layer; the intermediate layer contains the Li compound different from the Li silicate, being adjacent to a portion of the surface of the silicon compound particles, and/or the metal oxide and/or the metal hydroxide, being adjacent to at least a portion of the surface of the silicon compound particles; and the intermediate layer is coated with outermost carbon layer.

The metal oxide and/or the metal hydroxide can exhibit excellent water resistance. Consequently, by containing the metal oxide and/or the metal hydroxide to be adjacent to at least a portion of the surface of the silicon compound particles, the intermediate layer can improve the water resistance of the negative electrode active material and the stability during the mass production of the slurry without interfering too much with Li permeability. Moreover, excellent stability and excellent Li permeability can be further exhibited by a coexistence of the metal oxide and the metal hydroxide.

The Li compound different from the Li silicate in the inventive negative electrode active material is, for example, a composite compound containing Li, C, and O. Such a composite compound may be, for example, a material which was, during the heat treatment process, synthesized by condensing a decomposition product of a solvent used for producing the negative electrode active material particles and has a structure of carboxylic acid (O-C=O) in its part.

Although such a Li compound does not have such a high water resistance, by contained in the intermediate layer to be adjacent to the portion of the surface of the silicon compound particles, the stability of the negative electrode active material during the mass production of the slurry can be improved. In addition, such a Li compound is excellent in Li permeability; thus, the intermediate layer containing such a Li compound can exhibit excellent Li permeability.

In addition, the outermost carbon layer coating the intermediate layer can provide conductivity.

As a result, the inventive negative electrode active material can obtain excellent Li diffusibility and conductivity in the bulk while improving stability during the mass production of the slurry. By improving the Li diffusibility, initial efficiency, battery cycle characteristics, and the input characteristics can be improved.

Consequently, the inventive negative electrode active material can improve the initial efficiency to increase the battery capacity and improve the stability during the mass production of the slurry while realizing sufficient battery cycle characteristics.

Hereinafter, the inventive negative electrode active material is described in more detail.

The inventive negative electrode active material can be used as, for example, the negative electrode active material for a non-aqueous electrolyte secondary battery, in particular, for the lithium-ion secondary battery.

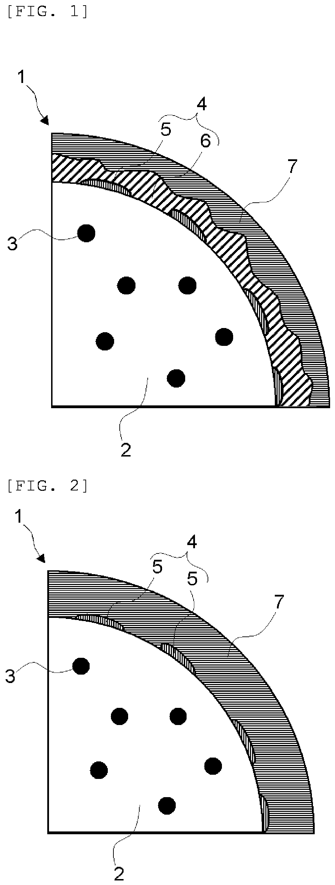

FIG. 1 shows a schematic partial sectional view of a negative electrode active material particle contained in an example of the inventive negative electrode active material.

A negative electrode active material particle 1, shown in FIG. 1, contain a silicon compound particle 2. The silicon compound particles 2 can be referred to as a silicon oxide material containing the silicon compound containing oxygen. A ratio of silicon to oxygen constituting this silicon oxide material is preferably in a range of $SiO_x$: $0.8 \leq x \leq 1.2$. When "x" is 0.8 or more, the cycle characteristics are better because an oxygen ratio is more increased than that of silicon alone. When "x" is 1.2 or less, it is preferred because the resistance of the silicon oxide material is not too high. Among these, it is preferred that the composition of $SiO_x$ has "x" closer to 1. This is because high cycle characteristics can be obtained. Note that the composition of the silicon compound of the present invention does not necessarily mean a purity of 100%, and trace amounts of impurity elements may be contained.

Note that, FIG. 1 shows an aspect of $SiO_x$ particle 2 containing Si-phases 3 therein as an example.

Moreover, in the inventive negative electrode active material, the silicon compound particle 2 contain the Li silicate. Specifically, it is preferred that the silicon compound particle 2 contains, at least in a part, at least one selected from the group consisting of $Li_2SiO_3$, $Li_4SiO_4$, and $Li_6Si_2O_7$. More specifically, it is more preferred that the silicon compound particle 2 contains $Li_2SiO_3$. In such a material, a $SiO_2$ component portion in the silicon oxide material, which is destabilized during insertion and desorption of lithium at charge-and-discharge of the battery, is modified to another lithium silicate in advance; thus, an irreversible capacity generated during the charge can be reduced. Moreover, the irreversible capacity accompanied by the charge-and-discharge can be reduced by overgrowing the Li silicate to the extent that the crystal growth of Si is suppressed. Accordingly, it is desirable for $Li_2SiO_3$ among the Li silicates formed in the bulk to have crystallinity.

However, an optimum range exists because too much overgrowth does not contribute to the charge-and-discharge.

Although $Li_4SiO_4$ and $Li_6Si_2O_7$ are more unstable than $Li_2SiO_3$ because of a larger degree of elution into water when slurried, these compounds can be fully utilized by improving the slurry stability during mass production by using the intermediate layer as described below.

In this case, $Li_4SiO_4$ has the most excellent Li diffusibility, however, it is desirable to be used practically in combination with $Li_2SiO_3$ that has high structural stability.

In addition, the Li silicates such as $Li_2SiO_3$, $Li_4SiO_4$, and $Li_6Si_2O_7$ contained in the bulk of the silicon oxide particles can be quantified by NMR (Nuclear Magnetic Resonance). A measurement by NMR can be performed, for example, under the following conditions.

$^{29}Si$-MAS-NMR (magic angle spinning nuclear magnetic resonance)

·Apparatus: a 700-NMR spectroscope manufactured by Bruker Corp.,
·Probe: a 4 mm HR-MAS rotor 50 μL,
·Sample Spinning Speed: 10 kHz,
·Measurement Environment Temperature: 25°C.

A degree of overgrowth of the Li silicate and a degree of crystallinity of Si can be confirmed by XRD (X-ray Diffraction: X-ray diffraction method). D8 ADVANCE, manufactured by Bruker Corporation, can be used as an X-ray diffraction apparatus. For example, the measurement is performed up to 10 to 40° with Cu-Kα rays as an X-ray source, using a Ni filter, with 40 kV/40 mA output, a slit width of 0.3°, a step width of 0.008°, and a counting time of 0.15 seconds per step.

The negative electrode active material particle 1 further contain the intermediate layer 4 coating a surface of the silicon compound particle 2 and the outermost carbon layer 7 coating the surface of the intermediate layer 4.

The intermediate layer 4 contained in the inventive negative electrode active material 1 contains a Li compound 5 different from the Li silicate, being adjacent to a portion of the surface of the silicon compound particles 2, and/or the metal oxide and/or the metal hydroxide 6, being adjacent to at least a portion of the surface of the silicon compound particles 2.

In an example shown in FIG. 1, the intermediate layer 4 contains both the Li compound 5 different from the Li silicate, and the metal oxide and/or the metal hydroxide 6.

Alternatively, as in an example shown in FIG. 2, the intermediate layer 4 may contain only the Li compound 5 different from the Li silicate.

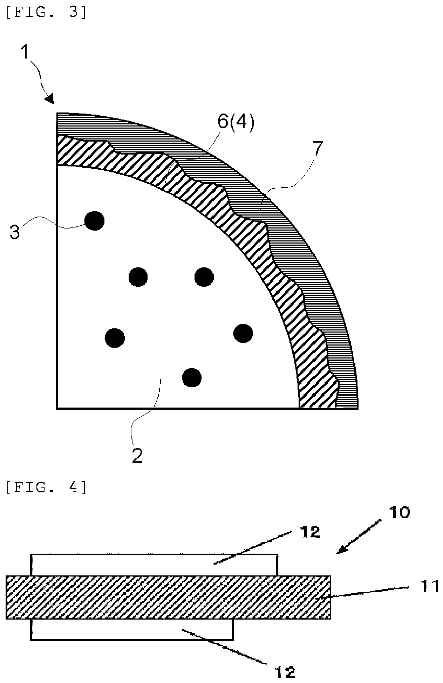

Alternatively, as in an example shown in FIG. 3, the intermediate layer 4 may contain only the metal oxide and/or the metal hydroxide 6.

The metal oxide and/or the metal hydroxide 6 can exhibit excellent water resistance. Consequently, by containing the metal oxide and/or the metal hydroxide 6 which is adjacent to at least a portion of the surface of the silicon compound particles 2, the intermediate layer 4 can improve the water resistance of the negative electrode active material and the slurry stability during the mass production without inhibiting the permeability of Li much. For example, when an alumina layer exists in the intermediate layer, Li-AlO$_x$ is generated at a first charge, and this material allows Li to pass through smoothly; thus the presence of an alumina layer has a better effect on the permeability of Li, although the presence of this material is not mandatory.

For example, the metal oxide can be generated by hydrolysis and dehydration-condensation of a metal alkoxide. In a process of forming a layer of the metal oxide using the metal alkoxide, a heat treatment is performed at 100°C or more, but it is highly possible to remain as a hydroxide layer in a part of the bulk.

Such a layer of the metal oxide can exhibit excellent stability and excellent Li permeability.

The Li compound 5 different from the Li silicate used in the present invention is, for example, the composite compound containing Li, C, and O. Such a composite compound may be, for example, a material which was, during the heat treatment process, synthesized by condensing the decomposition product of the solvent used in the production of the negative electrode active material particles and has the structure of the carboxylic acid (O-C=O) in a part of the material.

Li, C, and O, having the structure of the carboxylic acid, have the O-C=O structure, at least in a part, in a C1s waveform obtained by an XPS (X-ray photoelectron spectroscopy) spectrum.

Although the Li compound 5 different from the Li silicate does not have such a high water resistance, by containing the Li compound 5 in the intermediate layer 4 to be adjacent to the portion of the surface of the silicon compound particle 2, the stability of the negative electrode active material during the mass production of the slurry can be improved. In addition, such a Li compound 5 is excellent in Li permeability; thus, the intermediate layer 4 containing such a Li compound can exhibit excellent Li permeability.

In addition, the outermost carbon layer 7 coating the intermediate layer 4 can provide conductivity.

By containing the negative electrode active material particle 1 having such a structure, the inventive negative electrode active material can obtain excellent Li diffusibility and conductivity in the bulk while improving stability during the mass production of the slurry. By improving the Li diffusibility, the initial efficiency, the battery cycle characteristics, and the input characteristics can be improved.

The inventive negative electrode active material can improve the stability during the mass production of the slurry even in a case where the intermediate layer 4 contains only the Li compound 5 as shown in FIG. 2, or in the case where the intermediate layer 4 contains only the metal oxide and/or the metal hydroxide 6 as shown in FIG. 3. However, when the intermediate layer 4 contains both the Li compound 5 and the metal oxide and/or the metal hydroxide 6, and the Li compound 5 is coated with the metal oxide and/or the metal hydroxide 6, as shown in FIG. 1, the inventive negative electrode active material can sufficiently appreciate both the effect of the Li compound 5 and the effect of the metal oxide and/or the metal hydroxide 6, and thus more excellent Li diffusibility in the bulk can be exhibited while improving the stability during the mass production of the slurry.

In the example shown in FIG. 1, the Li compound 5 is adjacent to a portion of the surface of the silicon compound particle 2. In addition, the metal oxide and/or the metal hydroxide 6 is adjacent to a portion of the surface of the silicon compound particle 2, specifically, to the portion where the Li compound 5 is not adjacent to the silicon compound particle 2, and the Li compound 5 is coated with the metal oxide and/or the metal hydroxide 6.

On the other hand, when the surface of the silicon compound particle is coated with the carbon layer and then the surface of the carbon layer is coated with the metal oxide as an outermost surface, as disclosed in, e.g., Patent Document 14, there is no problem when slurrying by a small apparatus; however, the stability of during the mass production is decreased due to a reason described earlier.

The presence of the Li compound 5 and the metal oxide and/or the metal hydroxide 6 in the negative electrode active material particle 1 can be confirmed by an X-ray photoelectron spectroscopy (XPS).

The metal oxide and/or the metal hydroxide 6 preferably contains at least one element selected from the group consisting of aluminum, magnesium, titanium, zirconium, calcium, and niobium.

When the intermediate layer 4 coating on the surface of the silicon compound particles 2 contains such cation, excellent adhesiveness and excellent water resistance can be more reliably exhibited.

In addition, the metal oxide and/or the metal hydroxide in the intermediate layer 4 preferably has a thickness of 0.1 nm or more and 10 nm or less.

When the thickness of the metal oxide and/or the metal hydroxide 6 in the intermediate layer 4 is within this range, the film thickness can be controlled easily, and sufficient Li permeability can be exhibited.

The thickness of the metal oxide and/or the metal hydroxide 6 can be measured by the following procedure. Firstly, metal elements are quantified by inductively coupled plasma (ICP) analysis, and then a volume thereof is calculated from the known specific gravity (density). Moreover, a particle size at a median diameter D50 is provided from a particle size distribution of powder and the surface area is calculated by regarding the particle as a sphere. The thickness of the metal oxide and/or the metal hydroxide 6 can be calculated assuming that this area is coated uniformly with the metal oxide.

It is preferred that before the negative electrode active material particle 1 is charged and discharged, the negative electrode active material particle 1 contained in the inventive negative electrode active material has a peak attributed to a Si (111) crystal plane obtained by X-ray diffraction using Cu-K$\alpha$ rays, a crystallite size corresponding to the crystal plane is 5.0 nm or less, and a ratio A/B of an intensity A of the peak attributed to the Si (111) crystal plane relative to an intensity B of a peak attributed to a $Li_2SiO_3$ (111) crystal plane satisfies the following formula (1):

$$0.4 \leq A/B \leq 1.0 \qquad \cdots (1).$$

According to the negative electrode active material containing such negative electrode active material particle 1, high battery capacity can be realized while reducing the irreversible capacity. The smaller crystallite size corresponding to the Si (111) crystal plane is, the more preferable it is. The lower limit of the crystallite size corresponding to the Si (111) crystal plane is 0 nm (amorphous) because substantial amorphousness is desired.

The negative electrode active material particles 1 preferably have a median diameter of 4.5 $\mu$m or more and 15 $\mu$m or less.

When the median diameter of the negative electrode active material particles 1 is within this range, promotion of the reaction with the electrolyte liquid can be prevented, and failure of electron contacting due to the expansion of the active material accompanied by charge-and-discharge can be prevented. The median diameter of the negative electrode active material particles 1 can be measured by a laser-diffraction method particle size distribution measurement device.

<Method for Producing Negative Electrode Active Material>

The inventive method for producing the negative electrode active material is a method for producing negative electrode active material containing negative electrode active material particles, the method comprising the steps of:

producing silicon oxide particles represented by a general formula $SiO_x$ ($0.5 \leq x \leq 1.6$);
producing silicon compound particles containing Li silicate by inserting Li into the silicon oxide particles;
forming an intermediate layer on a surface of the silicon compound particles, the intermediate layer containing

a Li compound different from Li silicate, being adjacent to a portion of the surface of the silicon compound particles, and/or
a metal oxide and/or a metal hydroxide, being adjacent to at least a portion of the surface of the silicon compound particles;

forming an outermost carbon layer coating the intermediate layer to obtain negative electrode active material particles; and
using the negative electrode active material particles to produce a negative electrode active material.

According to the production method described above, the inventive negative electrode active material described earlier can be produced. However, the inventive negative electrode active material may also be produced by a production method other than the production method described here.

Hereinafter, concrete examples of the inventive method for producing a negative electrode active material are described.

[Step of Producing Silicon Oxide Particles]

Firstly, the silicon oxide particles (silicon oxide particles) containing the silicon compound containing oxygen are produced. Hereinafter, cases are described, in which the silicon oxide represented by $SiO_x$ ($0.5 \leq x \leq 1.6$) is used as the silicon compound containing oxygen.

To begin with, a raw material that generates silicon oxide gas is heated in a temperature range of 900°C to 1600°C under reduced pressure in the presence of inert gas to generate the silicon oxide gas. In this case, a mixture of metallic silicon powder and silicon dioxide powder can be used as the raw material. Considering the presence of surface oxygen of the metallic silicon powder and trace oxygen in a reaction furnace, a mixing mole ratio is preferably within a range of 0.9 < metallic silicon powder/silicon dioxide powder < 1.2.

The generated silicon oxide gas is solidified and deposited on an adsorbing plate. Subsequently, the deposit of silicon oxide is taken out in the state of the temperature in the reaction furnace being lowered to 100°C or less, and then the deposit is ground and powdered using a ball mill, a jet mill, or the like. Thus, the silicon oxide particles can be produced. Note that the Si crystallite in the silicon oxide particles can be controlled by changing the evaporation temperature of the raw material which generates silicon oxide gas, or by a heat treatment after the generation of the silicon oxide particles.

[Step of Producing Silicon Compound Particles Containing Li Silicate]

Next, Li is inserted into the silicon oxide particles produced as described above. This produces the silicon compound particles containing the Li silicate. That is, this results in the Li silicate being generated in the silicon oxide particles. The insertion of Li is preferably performed by an electrochemical method or a redox method.

In the modification (the insertion of Li) by the redox method, to begin with, lithium can be inserted by immersing the silicon oxide particles into solution-A where lithium is dissolved into an ether-based solvent, and thus, the silicon compound particles containing the Li silicate can be obtained, for example. This solution-A may also contain a polycyclic aromatic compound or a linear polyphenylene compound.

After inserting lithium, active lithium can be desorbed from the silicon compound particles by immersing the silicon compound particles into solution-B, which contains the polycyclic aromatic compound or its derivatives. Solvents usable for this solution-B include, for example, ether-based solvents, ketone-based solvents, ester-based solvents, alcohol-based solvents, amine-based solvents, and a mixture thereof. The obtained silicon compound particles may be heat treated in an inert gas after being immersed in the solution-A. Performing the heat treatment can make the Li compound stable. After that, the compound may be cleaned by cleaning methods using alcohol, alkaline water in which lithium carbonate is dissolved, weak acid, or pure water.

As an ether-based solvent used in the solution-A, diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, or the like may be used. Among these, in particular, tetrahydrofuran, dioxane, or 1,2-dimethoxy ethane may be preferably used. These solvents is preferably dehydrated and is preferably deoxygenized.

Further, as the polycyclic aromatic compound contained in the solution-A, one or more kinds of naphthalene, anthracene, phenanthrene, naphthacene, pentacene, pyrene, picene, triphenylene, coronene, chrysene, and derivatives thereof can be used, and, as the linear polyphenylene compound, one or more kinds of biphenyl, terphenyl, and derivatives thereof can be used.

As the polycyclic aromatic compound contained in the solution-B, one or more kinds of naphthalene, anthracene, phenanthrene, naphthacene, pentacene, pyrene, picene, triphenylene, coronene, chrysene, and derivatives thereof can be used.

Further, as the ether-based solvent of the solution-B, diethyl ether, tert-butyl methyl ether, tetrahydrofuran, dioxane, 1,2-dimethoxy ethane, diethylene glycol dimethyl ether, triethylene glycol dimethyl ether, and tetraethylene glycol dimethyl ether, and the like can be used.

As the ketone-based solvent, acetone, acetophenone, or the like can be used.

As the ester-based solvent, methyl formate, methyl acetate, ethyl acetate, propyl acetate, and isopropyl acetate or the like can be used.

As the alcohol-based solvent, methanol, ethanol, propanol, isopropyl alcohol, or the like can be used.

As an amine-based solvent, methylamine, ethylamine, ethylenediamine, or the like can be used.

The silicon compound particles obtained in this step may be the particles whose surface layers are coated with the decomposition product of the solution used in the process of the insertion of Li.

[Step of Forming Intermediate Layer on Surface of Silicon Compound Particles]

Next, the intermediate layer is formed on the surface of the silicon compound particles. The intermediate layer can contain both the Li compound 5 different from the Li silicate, being adjacent to a portion of the surface of the silicon compound particles 2 and the metal oxide and/or the metal hydroxide 6, being adjacent to at least a portion of the surface of the silicon compound particles 2 as shown in FIG. 1, or contain only the Li compound 5 as shown in FIG. 2, or contain only the metal oxide and/or the metal hydroxide 6 as shown in FIG. 3.

Hereinafter, examples of forming methods of the intermediate layer 4 shown in FIGs. 1 to 3 are described, respectively.

(Case in FIG. 1)

When the intermediate layer 4 shown in FIG. 1 is formed, firstly, the silicon compound particles 2 containing the Li compound on the surface are produced in the previous step of producing the silicon compound particles 2 containing Li silicate.

Next, a part of the Li compound existing on the surface of the silicon compound particles 2 is removed. For example, the silicon compound particles 2 are sufficiently cleaned with the solution-B selected from the examples described earlier to form particles with a surface carbon component (the C component in the Li compound different from the Li silicate), being 0.5 mass% or less relative to total particles. Consequently, the Li compound 5 different from Li silicate, being adjacent to a portion of the surface of the silicon compound particles 2 can be obtained as shown in FIG. 1.

Next, a part of the surface of the silicon compound particles 2 and the surface of the Li compound 5 are coated with the metal oxide and/or the metal hydroxide 6.

It is preferred that the metal oxide and/or the metal hydroxide 6 is formed by hydrolysis and dehydration-condensation of a metal alkoxide. Note that, in the process of forming a layer of the metal oxide using the metal alkoxide, it is highly possible that a heat treatment at 100°C or more leaves a part of the metal alkoxide as a hydroxide layer in the bulk.

For example, it is preferred that the metal oxide and/or the metal hydroxide 6 is formed by using Al-i-propoxide, Mg-methoxide, Ca-i-propoxide, Ca-methoxide, Al-tert butoxide, Al-sec butoxide, Al-i-propoxide, Al-n-butoxide, Zr-n-butoxide, Ti-tert-butoxide, Ti-i-propoxide, Ti-n-butoxide, Nb-i-propoxide, or Nb-n-butoxide as the metal alkoxide. When the surfaces of the silicon compound particles 2 are coated with the intermediate layer 4 containing the metal oxide and/or the metal hydroxide 6 formed from these materials as a starting material, excellent water resistance can be more reliably exhibited.

More specifically, the metal oxide and/or the metal hydroxide 6 can be formed, for example, by the following procedure.

The silicon compound particles 2, being sufficiently cleaned as described above, are placed in a solution, in which the solution-B and the metal hydroxide, each selected from the examples given earlier, are dispersed and sufficiently stirred. A following method is proposed as an example.

Stirring is performed in a 200 mL beaker and on a hot plate under a condition of 100°C, 500 rpm for 3 hr. As raw materials, 50 g of Li-SiO, 0.25 g of Al(O-i-Pr)$_3$ (0.5 % relative to silicon compound particles), and 100 mL of diglyme are used.

The intermediate layer 4 containing the Li compound 5 and the metal oxide and/or the metal hydroxide 6 shown in FIG. 1 can be obtained by subjecting the powder obtained after stirring to filtering and drying in a range of 100°C to 400°C.

(Example of FIG. 2)

When the intermediate layer 4 shown in FIG. 2 is formed, firstly, the silicon compound particles 2 containing the Li compound in the surface are produced in the previous step of producing the silicon compound particles 2 containing Li silicate.

Next, a portion of the Li compound existing on the surface of the silicon compound particle 2 is removed in the same way as in the procedure shown earlier. Thus, the intermediate layer 4 can be obtained, which contains only the Li compound 5 different from Li silicate, being adjacent to a part of the surface of the silicon compound particle 2 as shown in FIG. 2.

(Example of FIG. 3)

The intermediate layer 4 shown in FIG. 3 can be formed, for example, by the following procedure.

When the silicon compound particles 2 containing the Li compound different from the Li silicate on the surface are produced in the previous step of producing the silicon compound particles 2 containing Li silicate, all the Li compounds different from the Li silicate existing on the surface of the silicon compound particle 2 are removed.

Next, the metal oxide and/or the metal hydroxide 6 is formed on the surface of the silicon compound particle 2 in the same procedure described earlier. Consequently, the intermediate layer 4 containing only the metal oxide and/or the metal hydroxide 6, being adjacent to the surface of silicon compound particle 2, can be obtained as shown in FIG. 3.

[Step of Forming Outermost Carbon Layer coating Intermediate Layer to obtain Negative Electrode Active Material Particles]

Subsequently, the outermost carbon layer is formed on the surface of the intermediate layer.

The method for generating the carbon layer is not particularly limited, but, for example, a pyrolytic CVD method can be exemplified. An example of a method for generating the carbon layer by the pyrolytic CVD method is described below.

Firstly, silicon compound particles coated with the intermediate layer are set in a furnace. Next, hydrocarbon gas is introduced into the furnace, and the temperature is raised in the furnace. A decomposition temperature is not particularly limited, but the temperature is desirably 650°C or less, more desirably 600°C or less. By setting the decomposition temperature at 650°C or less, an unintended disproportionation of the silicon compound particles can be suppressed. After raising the temperature in the furnace to a predetermined temperature, the carbon layer is generated on the surface of the intermediate layer. Moreover, the hydrocarbon gas to be the raw material of the carbon material is not particularly limited, but it is desirable to have the composition of $C_nH_m$ composition wherein $n \leq 3$. When $n \leq 3$, a production cost can be lowered, and the decomposed product can have excellent physical properties.

The Li silicate generated by the Li insertion (modification) in the redox method is $Li_4SiO_4$, which can be converted to other Li silicates such as $Li_2SiO_3$ by a CVD treatment. A degree of crystallization of the Li silicate and Si is changed depending on the temperature at this time. In addition, the reaction temperature during the Li insertion is also related to the degree of crystallization of the Li silicate and Si.

By this step, the negative electrode active material particles 1 having a structure shown in, e.g., FIGs 1 to 3 can be obtained.

[Step of Using Negative Electrode Active Material Particles to Produce Negative Electrode Active Material]

The negative electrode active material is produced by using the negative electrode active material particles produced as described above. Thus, an example of the inventive negative electrode active material can be produced.

<Negative Electrode>

The inventive negative electrode active material can be used in the negative electrode, for example, for the non-aqueous electrolyte secondary battery, in particular, for the lithium-ion secondary battery.

Subsequently, a structure of the negative electrode containing the inventive negative electrode active material is described referring to an example. FIG. 4 shows a schematic cross-sectional view of an example of the negative electrode containing the inventive negative electrode active material. As shown in FIG. 4, the negative electrode 10 has a structure with negative electrode active material layers 12 on a negative electrode current collector 11. This negative electrode active material layer 12 may be provided on both surfaces of the negative electrode current collector 11, as shown in FIG. 4, or only on one side of the surfaces. Moreover, in the negative electrode of the present invention, the negative electrode current collector 11 may be absent.

Hereinafter, each member is described.

[Negative Electrode Current Collector]

The negative electrode current collector 11 is made of a material with excellent conductivity and high mechanical strength. Examples of conductive materials that can be used for the negative electrode current collector 11 include copper (Cu) and nickel (Ni). It is preferred that such conductive materials do not form an intermetallic compound with lithium (Li).

The negative electrode current collector 11 preferably contains carbon (C) or sulfur (S) in addition to its main element. This is because these elements improve the physical strength of the negative electrode current collector 11. In particular, when the active material layer that expands during charging is included, the current collector containing the above element has an effect of inhibiting the deformation of the electrode, including the current collector. The content of each of the above elements is preferably, but not limited to, 100 ppm or less by mass. This is because such content ensures more efficient inhibition of the deformation.

The surface of the negative electrode current collector 11 may or may not be roughened. Examples of the roughened negative electrode current collector include a metallic foil subjected to an electrolyzing process, an embossing process, or chemical etching. Examples of the negative electrode current collector that is not roughened include a rolled metallic foil.

[Negative Electrode Active Material Layer]

The negative electrode active material layer 12 contains the inventive negative electrode active material which is capable of occluding and releasing lithium ions. In view of battery design, other materials may be further contained, such as a negative electrode binding agent (binder) or a conductive auxiliary agent. The negative electrode active material includes the inventive negative electrode active material.

Meanwhile, the negative electrode active material layer 12 may contain a mixed negative electrode active material containing the inventive negative electrode active material (silicon-based negative electrode active material) and a carbon-based active material. Thereby, electric resistance in the negative electrode active material layer can be decreased, and expansive stress accompanied by charging can be mitigated. As carbon-based active materials, for example, pyrolysis carbons, cokes, glass-like carbon fibers, organic polymer compound calcined products, carbon blacks, etc., can be used.

Meanwhile, the negative electrode binder contained in the negative electrode active material layer 12 can be, for example, any one or more of polymer materials and synthetic rubbers. Examples of polymer materials include polyvinylidene fluoride, polyimide, polyamideimide, aramid, polyacrylic acid, lithium polyacrylate, sodium polyacrylate and carboxymethyl cellulose. Examples of synthetic rubbers include styrene butadiene-based rubbers, fluorine-based rubbers, and ethylene propylene diene.

As a negative electrode conductive auxiliary agent, for example, any one or more of carbon materials, such as carbon black, acetylene black, graphite, ketjen black, carbon nanotube, and carbon nanofiber, can be used.

The negative electrode active material layer 12 is formed by, for example, an application method. The application method is a method in which the silicon-based negative electrode active material is mixed with, e.g., the binding agents described above and, as needed, the conductive auxiliary agent and the carbon-based active material, the mixture is dispersed in an organic solvent or water, etc., and then the resultant is applied.

Specifically, the method is described below, for example. Firstly, the inventive negative electrode active material produced as described earlier is mixed with other materials such that the negative electrode binder and the conductive auxiliary agent to form a negative electrode mixture, and then an organic solvent or water is added to the mixture to make a slurry. The above slurry is then applied to the surface of the negative electrode current collector and dried to form the negative electrode active material layer. In this event, heat pressing and the like may be performed as needed. In this way, the negative electrode containing the inventive negative electrode active material can be produced.

Note that the inventive negative electrode active material is particularly suitable for forming the slurry by using water but can also be applied for forming the slurry by using the organic solvent.

<Lithium-ion Secondary Battery>

The negative electrode containing the inventive negative electrode active material can be used for the negative electrode for the non-aqueous electrolyte secondary battery, e.g., for the lithium-ion secondary battery.

Next, as a concrete example of the non-aqueous electrolyte secondary battery in which the inventive negative electrode active material can be used, an example of a laminate film type lithium-ion secondary battery is described.

[Structure of Laminate Film Type Secondary Battery]

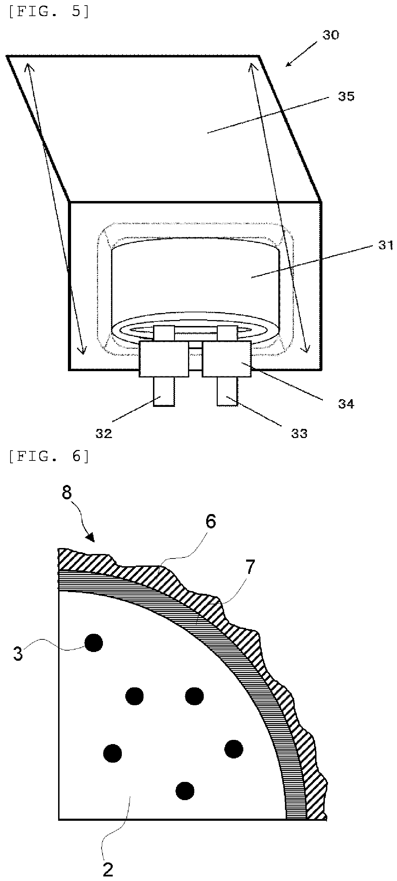

The laminate film type lithium-ion secondary battery 30 shown in FIG. 5 mainly includes a wound electrode assembly 31 stored inside sheet-shaped exterior member 35. This wound electrode assembly 31 is formed by winding a positive electrode, a negative electrode, and a separator sandwiched between these electrodes. There is also a case of storing a stack having the separator sandwiched between the positive electrode and the negative electrode without being wound. The electrode assemblies of both types have a positive electrode lead 32 attached to the positive electrode and a negative electrode lead 33 attached to the negative electrode. The outermost circumference of the electrode assembly 31 is protected by a protective tape.

For example, the positive electrode lead 32 and the negative electrode lead 33 are extended outward in one direction from the interior of the exterior member 35. The positive electrode lead 32 is made of, for example, a conductive material such as aluminum, and the negative electrode lead 33 is made of, for example, a conductive material such as nickel or copper.

The exterior member 35 is, for example, a laminated film in which a fusion layer, a metal layer, and a surface-protective layer are laminated in this order. In this laminated film, two fusion layers of the film are bonded to each other by fusion or an adhesive at outer peripheries of the fusion layers thereof so that the fusion layer is opposite to the electrode assembly 31. The fused portion is, for example, a film of polyethylene, polypropylene, etc., and the metal portion is an aluminum foil, etc. The protective film is of, for example, nylon.

Sealing films 34 are inserted in the respective gaps between the exterior member 35 and each of the positive electrode lead 32 and the negative electrode lead 33 to prevent entry of outside air. The material of the sealing film is, for example, polyethylene, polypropylene, or polyolefin resin.

Hereinafter, each member is described respectively.

[Positive Electrode]

The positive electrode has, for example, a positive electrode active material layer provided on both surfaces or one surface of a positive electrode current collector, as in the negative electrode 10 shown in FIG. 4.

The positive electrode current collector is formed by, for example, a conductive material such as aluminum.

The positive electrode active material layer contains any one or two or more of positive electrode materials (positive electrode active material) capable of occluding and releasing lithium ions and may contain other materials such as a positive electrode binder, a positive electrode conductive auxiliary agent, and the dispersing agent, according to design.

The positive electrode material is preferably a lithium-containing compound. Examples of this lithium-containing compound include a composite oxide composed of lithium and a transition metal element or a phosphate compound containing lithium and a transition metal element. Among these positive electrode materials, a compound containing at least one of nickel, iron, manganese, and cobalt is preferable. The chemical formula of this compound is expressed by, for example, $Li_xM1O_2$ or $Li_yM2PO_4$, where M1 and M2 represent at least any one of the transition metal elements. In this formula, "x" and "y" represent a value varied depending on the state of charge-and-discharge of a battery, which typically satisfies $0.05 \leq x \leq 1.10$ and $0.05 \leq y \leq 1.10$.

Examples of the composite oxide containing lithium and the transition metal element include lithium cobalt composite oxide ($Li_xCoO_2$) and lithium nickel composite oxide ($Li_xNiO_2$). Examples of the lithium nickel composite oxide include lithium nickel cobalt aluminum composite oxide (NCA) and lithium nickel cobalt manganese composite oxide (NCM).

Examples of the phosphate compound containing lithium and a transition metal element include, for example, a lithium iron phosphate compound ($LiFePO_4$) and a lithium iron manganese phosphate compound ($LiFe_{1-u}Mn_uPO_4$ ($0 < u < 1$)). When these positive electrode materials are used, high battery capacity and excellent cycle characteristics can be obtained.

As the positive electrode binder, for example, any one or more of polymer materials, synthetic rubber, can be used. Polymer materials are, for example, polyvinylidene fluoride, polyimide, polyamideimide, aramid, polyacrylic acid, lithium polyacrylate, sodium polyacrylate, and carboxymethyl cellulose. Synthetic rubbers include styrene-butadiene rubber, fluorinated rubber, and ethylene propylene diene, for example.

As the positive electrode conductive auxiliary agent, for example, any one or more of carbon materials, such as carbon black, acetylene black, graphite, ketjen black, carbon nanotube, and carbon nanofiber, can be used.

[Negative Electrode]

The negative electrode containing the inventive negative electrode active material is used as the negative electrode for the secondary battery. The negative electrode, which is included in this secondary battery, preferably has a larger negative electrode charge capacity relative to the electrical capacitance (charge capacity as a battery) provided by the positive electrode active material agent. As a result, the precipitation of lithium metal on the negative electrode can be suppressed.

In this example, the positive electrode active material layers are provided partially on both faces of the positive electrode current collector, and similarly, the negative electrode active material layers of the present invention are also provided partially on both faces of the negative electrode current collector. In this case, for example, the negative electrode active material layers provided on the negative electrode current collector are preferably provided with a region where the opposite positive electrode active material layers are not present. This is to design a stable battery.

The region at which the positive electrode active material layers and negative electrode active material layers do not face one another as described above, is hardly affected by charge-and-discharge. Therefore, the state of the negative electrode active material layers is retained from just after the formation. This enables investigation of, for example, a composition of the negative electrode active material with excellent reproducibility and high precision without dependence on the presence or absence of charge-and-discharge.

[Separator]

The separator separates lithium metals, or the positive electrode from the negative electrode so as to prevent short circuits due to contact of both electrodes while passing lithium ions through. This separator may be made of, for example, a porous film of synthetic resin or ceramics and may have a laminated structure in which two or more porous films are laminated. Examples of synthetic resin include polytetrafluoroethylene, polypropylene, and polyethylene.

[Electrolyte Liquid]

At least a part of each of the positive electrode active material layer and the negative electrode active material layer, or the separator is impregnated with a non-aqueous electrolyte in liquid form (electrolyte liquid). This electrolyte liquid contains electrolyte salt dissolved in a solvent and may contain other materials, such as additives.

The solvent can be, for example, a non-aqueous solvent. Examples of non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, at least any one or more of ethylene carbonate, propylene carbonate, dimethyl carbonate, diethyl carbonate, or ethylmethyl carbonate is preferably used. This is because using such solvent can provide better characteristics. In this case, more advantageous characteristics can be obtained by combining highviscosity solvents such as ethylene carbonate or propylene carbonate with low-viscosity solvents such as dimethyl carbonate, ethylmethyl carbonate, or diethyl carbonate. This is because the dissociation and ion mobility of electrolyte salts are improved.

When an alloy-based negative electrode is used, it is desirable that, in particular, the solvent contains at least any one of the halogenated chain carbonate ester or halogenated cyclic carbonate ester. Thereby, a stable coating is formed on the surface of the negative electrode active material at charge-and-discharge, particularly charging. In this case, the halogenated chain carbonate ester is chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The kind of the halogen is preferably, but not limited to, fluorine. This is because fluorine enables the formation of the coating with a better quality than other halogens. A larger number of halogens is better. This is because the coating obtained is more stable and a decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains cyclic carbonic ester having unsaturated carbon bond. This is because a stable coating can be formed on the surface of the negative electrode at charge-and-discharge, and the decomposition reaction of the electrolyte liquid can be suppressed. Examples of the cyclic carbonic ester having unsaturated carbon bond include vinylene carbonate and vinyl ethylene carbonate.

In addition, the solvent additive preferably contains sultone (cyclic sulfonic acid ester). This is because the chemical stability of a battery can be improved. Examples of sultone include propane sultone and propene sultone.

In addition, the solvent preferably includes acid anhydride. This is because this enables improvement of the chemical stability of the electrolyte liquid. Examples of acid anhydride include propane disulfonic acid anhydride.

The electrolyte salt can contain, for example, any one or more of light metal salts, such as lithium salt. Examples of lithium salt include lithium hexafluorophosphate ($LiPF_6$) and lithium tetrafluoroborate ($LiBF_4$).

The content of the electrolyte salt relative to the solvent is preferably 0.5 mol/kg or more and 2.5 mol/kg or less. This is because high ionic conductivity can be obtained.

[Method for Producing Laminate Film Type Secondary Battery]

The laminate film type secondary battery described above can be produced, for example, by the following procedure.

Firstly, the positive electrode is produced with the above-described positive electrode material. The positive electrode active material is mixed with, as necessary, the positive electrode binder, the positive electrode conductive auxiliary agent, or the like to make a positive electrode mixture. Then, the mixture is dispersed in an organic solvent to form a positive electrode mixture slurry. The mixture slurry is then applied to the positive electrode current collector with a coating apparatus, such as a die coater having a knife roll or a die head, and dried by hot air to obtain the positive electrode active material layer. The positive electrode active material layer is finally subjected to compression molding with, for example, a roll press. In this case, heating may be performed, and the compression may be repeated multiple times.

Next, by following the same procedure as the above-described procedure for producing the negative electrode 10, the negative electrode active material layer is formed on the negative electrode current collector to produce the negative electrode.

In producing the positive electrode and the negative electrode, the active material layers are formed on both faces of each of the positive and the negative electrode current collectors, respectively. For each electrode, the active materials applied to both sides of the current collector may have different lengths (see FIG. 4).

Then, the electrolyte liquid is prepared. Then, with ultrasonic welding and so on, the positive electrode lead 32 is attached to the positive electrode current collector, and the negative electrode lead 33 is attached to the negative electrode current collector. Then, the positive electrode and negative electrode are stacked with the separator interposed therebetween and then wound to produce the wound electrode assembly 31, and the protecting tape is stuck to the outermost circumference of the assembly 31. Then, the wound electrode assembly 31 is molded to form a flat shape. The wound electrode assembly 31 is then sandwiched between the folded film-shaped exterior member 35, and insulating portions of the exterior member are bonded to one another by heat sealing; thereby, the wound electrode assembly 31 is encapsulated with one direction being released. Subsequently, the sealing films 34 are inserted between the exterior member 35, and each of the positive electrode lead 32 and the negative electrode lead 33. Then, the prepared electrolyte liquid described above is introduced from the released portion in a prescribed amount to perform the impregnation of the electrolyte liquid under a vacuum. After the impregnation, bonding is performed at the released portion by vacuum heat sealing. In this manner, the laminate film type secondary battery 30 can be produced.

In a non-aqueous electrolyte secondary battery such as the laminate film type secondary battery 30 produced above, a utilization ratio of the negative electrode at charge-and-discharge is preferably between 93% or more and 99% or less. When the utilization ratio of the negative electrode is in the range of 93% or more, an initial charge efficiency does not decrease, and battery capacity can be greatly improved. In addition, when the utilization ratio of the negative electrode is in the range of 99% or less, Li precipitation will not occur, and safety can be ensured.

EXAMPLES

Hereinafter, the present invention will be specifically described with reference to Examples and Comparative Examples. However, the present invention is not limited thereto.

(Examples 1 to 3)

Firstly, a negative electrode active material was produced as follows. A raw material obtained by mixing metal silicon and silicon dioxide was introduced in a reaction furnace. In this reaction furnace, the raw material was vaporized in an atmosphere of a degree of vacuum of 10 Pa and deposited on an adsorption plate. The deposit was taken out after being sufficiently cooled and pulverized by a ball mill. A value of "x" of $SiO_x$ in silicon oxide particles thus obtained was 1.0.

Next, the particle size of the silicon oxide particles was adjusted by classification. Subsequently, water content was then reduced to 50 ppm and lithium is inserted into the silicon oxide particles by a redox method using an ether-based solvent in which lithium was dissolved to modify the silicon oxide particles. Thus, the silicon compound particles containing Li silicate were obtained.

When the obtained silicon compound particles were analyzed by an X-ray photoelectron spectroscopy (XPS), it was found that a surface of silicon compound particles was coated with Li compound different from Li silicate.

Next, the obtained silicon compound particles were cleaned with diethyl ether, and then particles having a carbon component on the surface (meaning a C component constituting the Li compound different from the Li silicate) of 0.2 mass% were formed. Thereby, a portion of the Li compound existing on the surface of the silicon compound particles was removed and a part thereof was left.

Subsequently, the sufficiently cleaned particles were placed into a solution in which diethyl ether and Al-sec butoxide were dispersed, and then sufficiently stirred at 100°C, 500 rpm for 3 hours. The powder was then filtered and dried in a range of 100°C to 400°C to form a layer of aluminum oxide. Thereby, an intermediate layer, which coated the surface of the silicon compound particles and contained the Li compound different from the Li silicate and contained aluminum oxide, was obtained.

Subsequently, a pyrolysis CVD at temperatures ranging from 450°C to 650°C was performed to further coat the intermediate layer coating the surface of the silicon compound particles with a carbon layer and to change a Li silicate type contained the silicon compound particles.

In this way, each negative electrode active material in Examples 1 to 3 containing the negative electrode active material particles was obtained.

When each negative electrode active material was observed by XPS (XPS / PHI Quantera II was used), it was found that each negative electrode active material in Examples 1 to 3 contained the negative electrode active material particles 1 having the structure described earlier with reference to FIG. 1. Note that the observation by XPS is described in detail in a later paragraph.

In addition, the Li silicates contained in the negative electrode active material particles of each negative electrode active material were analyzed by NMR. The analytical conditions were set to the conditions described earlier. The results of the analysis are shown in Table 1 below.

Moreover, a median diameter of the negative electrode active material particles contained in each negative electrode active material, and a ratio (a peak intensity ratio A/B) of an intensity A of a peak attributed to a Si (111) crystal plane relative to an intensity B of a peak attributed to a $Li_2SiO_3$ (111) crystal plane are shown in Table 1 below. Note that the intensity ratio A/B was confirmed by XRD. In addition, Si contained in each negative electrode active material was confirmed to be amorphous by XRD.

Then, the negative electrode active material (the active material containing the silicon compound particles coated with the intermediate layer and the carbon layer in sequence) produced as described above, graphite, a conductive auxiliary agent 1 (carbon nanotube, CNT), a conductive auxiliary agent 2 (carbon fine particles having a median diameter of approximately 50 nm), sodium polyacrylate, and carboxymethylcellulose (hereinafter, referred to as CMC) were mixed at a dry mass ratio of 9.3 : 83.7 : 1 : 1 : 4 : 1. Then the mixture was diluted with pure water to form a negative electrode mixture slurry. A mixing of materials was performed by a mass production apparatus and the slurry was obtained by applying a high shearing force.

At this time, stability during mass production of the slurry had been monitored based on a pot-life and confirmed whether it was stable or not 48 hours later. This can be judged by the presence or absence of hydrogen gas generated from the slurry. The result is shown in Table 3 below.

In addition, as a negative electrode current collector, an electrolytic copper foil having a thickness of 15 $\mu$m was

used. This electrolytic copper foil contained carbon and sulfur at each concentration of 70 ppm by mass. Finally, the negative electrode mixture slurry was applied onto the negative electrode current collector, and dried in a vacuum atmosphere at 100°C for one hour. After drying, an amount of the deposited negative electrode active material layer per unit area (also referred to as an area density) on one surface of the negative electrode was 7.0 mg/cm$^2$.

[Assembling Coin Battery for Testing]

Subsequently, solvent ethylene carbonate (EC) and dimethyl carbonate (DMC) were mixed, followed by dissolving an electrolyte salt (lithium hexafluorophosphate: LiPF$_6$) to prepare the electrolyte liquid. In this case, the solvent composition was set to EC : DMC = 30 : 70 in a volume ratio, and the content of the electrolyte salt was set to 1 mol/kg relative to the solvent. As an additive, vinylene carbonate (VC) and fluoroethylene carbonate (FEC) were added at 1.0 mass% and 2.0 mass%, respectively.

Next, coin batteries were assembled as follows. Firstly, Li foils having a thickness of 1 mm were punched to a piece having a diameter of 16 mm and the piece was attached to aluminum clads.

Then, the negative electrodes obtained beforehand were punched to a piece having a diameter of 15 mm, the piece was faced with the Li foils attached to the aluminum clads via separators, and after electrolyte liquid injection, 2032 coin batteries were produced.

[Measurement of Initial Efficiency]

Initial efficiency was measured under the following conditions. Firstly, for the produced coin batteries for the initial efficiency test, the charging (first charge) was performed in CCCV mode at a charge rate corresponding to 0.03 C. The CV was 0 V, and the termination current was set to 0.04 mA. Then, CC discharge (first discharge) was carried out by making the discharge rate at 0.03 C as well, and discharge termination voltage at 1.2 V.

To investigate initial charge-and-discharge characteristics, the first efficiency (hereinafter, may be referred to as initial efficiency) was calculated. The initial efficiency was calculated from the equation shown by Initial Efficiency (%) = (First Discharge Capacity / First Charge Capacity) $\times$ 100. The results, as initial efficiencies, are shown in Table 3 below.

[Production of Lithium-ion Secondary Battery and Battery Evaluation]

From the initial data obtained, a counter-positive electrode was designed to achieve a utilization ratio of 95% for a negative electrode. Based on the following equation, the utilization ratio was calculated from positive and negative electrode capacities obtained with Li of a counter electrode.

Utilization Ratio = (Positive Electrode Capacity - Negative Electrode Loss) / (Negative Electrode Capacity - Negative Electrode Loss) $\times$ 100

Each lithium-ion secondary battery of the Examples 1 to 3 was produced based on this design. Each lithium-ion secondary battery of Examples and Comparative Examples was subjected to battery evaluation.

The cycle characteristics were investigated as follows. Firstly, for battery stabilization, two cycles of charging and discharging were performed at 0.2 C under an atmosphere of 25°C, and the discharge capacity at the second cycle was measured. The battery cycle characteristics started from the discharge capacity at the third cycle were calculated, and the battery test was stopped at 100 cycles. The charging and discharging were performed at a charging rate of 0.7 C and a discharging rate of 0.5 C. The charge voltage was 4.3 V, the discharge termination voltage was 2.5 V, and the charge termination rate was 0.07 C. The result is shown in Table 3 below.

(Comparative Examples 1 to 3)

In Comparative Examples 1 to 3, each negative electrode active material in Comparative Examples 1 to 3 was obtained in the same way as in Examples 1 to 3, respectively, except that; all Li compounds different from Li silicate existing on a surface of silicon compound particles were removed by applying a strong shearing force after Li doping (insertion) and by cleaning in diethyl ether three times (filtering and washing three times), and that a layer of aluminum oxide was not formed.

Each negative electrode active material of Comparative Examples 1 to 3 was tested in the same way as in Example 1. As a result, as shown in Table 3, stability during the mass production of the slurry was confirmed to be significantly decreased. A massproduced slurry is needed to have a durability of at least 2 days (48 hours), and thus the durability in Comparative Examples 1 to 3 was unable to meet the requirement.

(Comparative Example 4)

In Comparative Example 4, carbon-coated silicon compound particles were obtained by Li-dope processing to SiO particles that had been coated with a carbon layer on the surface by a CVD at 600°C in advance. Subsequently, the carbon-coated silicon compound particles were introduced into a dispersion of Al isopropoxide in isopropyl alcohol (IPA), stirred, and dried, thereby forming a layer of metal oxide (aluminum oxide) on the carbon layer. Accordingly, a negative electrode active material in Comparative Example 4 was obtained.

FIG. 6 shows a schematic view of negative electrode active material particles contained in a negative electrode active material in Comparative Example 4.

A negative electrode active material particle 8, contained in the negative electrode active material in Comparative Example 4, contained silicon compound particle 2 containing Si-phases 3. The silicon compound particle 2 contained Li silicate by doping (insertion) of lithium. A surface of the silicon compound particle 2 was coated by a carbon layer 7. A surface of the carbon layer 7 was coated with an aluminum oxide layer 6 as an outermost surface.

Neither a Li compound different from Li silicate nor a metal hydroxide and/or a metal hydroxide was present between the silicon compound particles 2 and the carbon layer 7.

The negative electrode active material of Comparative Example 4 was tested in the same way as in Example 1. As a result, stability during the mass production of the slurry for 48 hours was unable to be obtained, as shown in Table 3. Note that when slurried by a small apparatus, the negative electrode active material in Comparative Example 4 successfully achieved stability during slurrying for 48 hours.

(Examples 1 to 3)

In Examples 1 to 3, as clear from the results shown in Table 3, it was confirmed that durability for 48 hours or more was achieved during the mass production of the slurry.

In addition, as clear from the results shown in Table 3, it was found that negative electrode active materials of Examples 1 to 3 successfully exhibited a higher capacity retention ratio than those of the negative electrode active materials of Comparative Examples 1 to 4, and successfully realized sufficient battery cycle characteristics.

(Examples 4 to 15)

In Examples 4 to 15, each negative electrode active material was produced in the same way as in Example 1, except that starting material for forming the metal oxide (metal alkoxide type) was changed, as shown in Table 1 below.

Each negative electrode active material in Examples 4 to 15 was tested in the same way as in Example 1. As a result, it was confirmed that the negative electrode active materials of Examples 4 to 15 successfully achieved durability of 48 hours or more during the mass production of the slurry, as in Examples 1 to 3, as shown in Table 3.

In addition, as clear from the results shown in Table 3, it was found that the negative electrode active materials of Examples 4 to 15 successfully exhibited a higher capacity retention ratio than those of the negative electrode active materials of Comparative Examples 1 to 4, and successfully realized sufficient battery cycle characteristics.

(Examples 16 to 18)

In Examples 16 to 18, each negative electrode active material was produced in the same way as in Example 1, except that a layer of aluminum oxide was not formed.

Each negative electrode active material of Examples 16 to 18 was tested in the same way as in Example 1. As a result, it was confirmed that the negative electrode active materials of Examples 16 to 18 successfully achieved durability of 48 hours or more during the mass production of the slurry as in Examples 1 to 3, as shown in Table 3.

In addition, as clear from the results shown in Table 3, it was found that the negative electrode active materials of Examples 16 to 18 successfully exhibited a higher capacity retention ratio than those of the negative electrode active materials of Comparative Examples 1 to 4, and successfully realized sufficient battery cycle characteristics.

(Examples 19 to 24)

In Examples 19 to 24, each negative electrode active material was produced in the same way as in Example 1, except that a thickness of a layer of aluminum oxide was varied by changing an additive amount of Al-sec butoxide used to form a layer of aluminum oxide.

Each negative electrode active material of Examples 19 to 24 was tested in the same way as in Example 1. As a result, it was confirmed that the negative electrode active materials of Examples 19 to 24 successfully achieved durability of 48 hours or more during the mass production of the slurry, as in Examples 1 to 3, as shown in Table 3.

In addition, as clear from the results shown in Table 3, it was found that the negative electrode active materials of Examples 19 to 24 successfully exhibited a higher capacity retention ratio than those of the negative electrode active materials of Comparative Examples 1 to 3 and successfully realized sufficient battery cycle characteristics. Moreover, it was found that the negative electrode active materials in Examples 19 to 23 successfully exhibited a higher capacity retention rate than negative electrode active material in Comparative Example 4 and successfully realized further sufficient battery cycle characteristics.

From these results, it was confirmed that even an aluminum oxide layer having a thickness of 0.1 nm was sufficient to exhibit characteristics. However, as the aluminum oxide layer became thicker, cycle characteristics tended to decrease due to higher resistance, and thus it can be said that the thickness has an optimum range.

(Examples 25 to 29)

In Examples 25 to 29, after forming an outermost carbon layer, additional heat treatment was performed on negative electrode active material particles, and thus, crystallinities of Si and Li silicate were changed. Each negative electrode active material was produced in the same way as in Example 1, except that a temperature was adjusted in a range of 600 to 700°C.

The negative electrode active materials in Examples 25 to 29 before charge-and-discharge were analyzed by X-ray diffraction (XRD) using Cu-K$\alpha$ rays.

According to an XRD chart obtained by an XRD analysis, a ratio A/B of intensity A of a peak attributed to a Si (111) crystal plane (appearing around $2\theta = 28.4°$) to intensity B of a peak attributed to a $Li_2SiO_3$ (111) crystal plane (appearing in a range of $2\theta = 17°$ to $21°$) was determined. Moreover, crystallite size corresponding to the Si (111) crystal plane was calculated from the peak attributed to the Si (111) crystal plane based on Scherrer's equation.

Results based on the XRD analysis are shown in Table 2 below. In addition, each negative electrode active material of Examples other than Examples 25 to 29 and of Comparative Examples was also analyzed by XRD, and the results are also shown together in Tables 1 and 2 below.

Each negative electrode active material of Example 25 to 29 was tested in the same way as in Example 1. As a result, it was confirmed that the negative electrode active materials of Examples 25 to 29 successfully achieved durability of 48 hours or more during the mass production of the slurry, as in Example 1, as shown in Table 3.

In addition, as clear from the results shown in Table 3, it was found that the negative electrode active materials of Examples 25 to 29 successfully exhibited a higher capacity retention ratio than those of the negative electrode active materials of Comparative Examples 1 to 3 and successfully realized sufficient battery cycle characteristics. Moreover, it was found that the negative electrode active materials of Examples 26 to 29 successfully exhibited a higher capacity retention ratio than those of the negative electrode active material of Comparative Example 4, and successfully realized further sufficient battery cycle characteristics.

In addition, based on the results of Examples 25 to 29, it was found that Examples 26 to 29 where crystallite size corresponding to the Si (111) crystal plane was 5.0 nm or less showed better cycle characteristics than that of Example 25 where crystallite size corresponding to the Si (111) crystal plane was 9.2 nm or less.

(Comparative Example 5)

In Comparative Example 5, a negative electrode active material was produced in the same way as in Example 1, except that an outermost carbon layer was not formed.

The negative electrode active material of Comparative Example 5 was tested in the same way as in Example 1. As a result, it was confirmed that the negative electrode active material of Comparative Example 5 successfully achieved durability of 48 hours or more during the mass production of the slurry in the same way as in Examples 1 to 3, as shown in Table 3.

However, as clear from a result shown in Table 3, the negative electrode active material of Comparative Example 5 exhibited a further inferior capacity retention ratio than those of the negative electrode active materials in Comparative Examples 1 to 3. From this result, it was found that conductivity was reduced and sufficient battery characteristics were unable to be obtained when the outermost carbon layer was not formed.

(Examples 30 to 36)

In Examples 30 to 36, each negative electrode active material was produced in the same way as in Example 1, except that a median diameter of negative electrode active material particles was changed by adjusting a particle size of silicon oxide particles by classification, as shown in Table 2 below. The particle size of the negative electrode active material particles contained in the negative electrode active material of other Examples and Comparative Examples are also shown together in Tables 1 and 2.

Each negative electrode active material of Example 30 to 36 was tested in the same way as in Example 1. As a result, it was confirmed that the negative electrode active materials of Examples 30 to 36 successfully achieved durability of 48 hours or more during the mass production of the slurry, as in Example 1, as shown in Table 3.

In addition, as clear from the results shown in Table 3, it was found that the negative electrode active materials of Examples 30 to 36 successfully exhibited a higher capacity retention ratio than those of the negative electrode active materials of Comparative Examples 1 to 3, and successfully realized sufficient battery cycle characteristics. Moreover, it was found that the negative electrode active materials of Examples 31 to 36 successfully exhibited a higher capacity retention ratio than those of the negative electrode active material of Comparative Example 4, and successfully realized further sufficient battery cycle characteristics.

Moreover, from the results of Examples 30 to 36, it was found that Examples 31 to 35, in which the median diameter of the negative electrode active material particles was 4.5 nm or more and 15 nm or less, exhibited better cycle characteristics than Examples 30 and 36, in which the median diameter of the negative electrode active material particles was 4 nm or 17 nm.

(Comparative Example 6)

In Comparative Example 6, silicon oxide particles were obtained in the same procedure as in Example 1, and a particle size of the obtained silicon oxide particles was adjusted by classification. The resulting silicon oxide particles were then made as a negative electrode active material in Comparative Example 6.

The negative electrode active material of Comparative Example 6 was tested in the same way as in Example 1. As a result, initial efficiency was 65 %, as shown in Table 3. In contrast, the inventive negative electrode active materials in Examples 1 to 36 successfully realized initial efficiency of 85 % or more.

Tables 1 and 2 below show conditions for each Example and each Comparative Example. Moreover, Table 3 below shows results of evaluation of each Example and each Comparative Example.

[Table 1]

| | Median Diameter (μm) | Li Silicate | Li compound different from Li Silicate (Li, C, O compound) | Metal Oxide | Film Thickness of Metal Oxide and/or Metal Hydroxide (nm) | Starting Material | Carbon Layer (nm) | Peak Intensity ratio of Si (111) to $Li_2SiO_3$ (111) in XRD (A/B) | Si (111) |
|---|---|---|---|---|---|---|---|---|---|
| Comparative Example 1 | 6.5 | $Li_4SiO_4$ | Absent | Absent | 0 | | 30 | 0.55 | Amorphous |
| Comparative Example 2 | 6.5 | $Li_2SiO_3$ | Absent | Absent | 0 | | 30 | 0.55 | Amorphous |
| Comparative Example 3 | 6.5 | $Li_2SiO_3$, $Li_6Si_2O_7$ | Absent | Absent | 0 | | 30 | 0.55 | Amorphous |
| Comparative Example 4 | 6.5 | $Li_2SiO_3$ | Absent | $AlO_x$ | 2 | Al-i-propoxide | 30 | 0.55 | Amorphous |
| Example 1 | 6.5 | $Li_2SiO_3$ | Present | $AlO_x$ | 2 | Al-sec butox-ide | 30 | 0.55 | Amorphous |
| Example 2 | 6.5 | $Li_4SiO_4$ | Present | $AlO_x$ | 2 | Al-sec butox-ide | 30 | 0.55 | Amorphous |
| Example 3 | 6.5 | $Li_2SiO_3$, $Li_6Si_2O_7$ | Present | $AlO_x$ | 2 | Al-sec butox-ide | 30 | 0.55 | Amorphous |
| Example 4 | 6.5 | $Li_2SiO_3$ | Present | $TiO_x$ | 2 | Ti-i-propoxide | 30 | 0.55 | Amorphous |
| Example 5 | 6.5 | $Li_2SiO_3$ | Present | $MgO_x$ | 2 | Mg-methoxide | 30 | 0.55 | Amorphous |
| Example 6 | 6.5 | $Li_2SiO_3$ | Present | $ZrO_x$ | 2 | Zr-n-butoxide | 30 | 0.55 | Amorphous |
| Example 7 | 6.5 | $Li_2SiO_3$ | Present | $AlO_x$ | 2 | Al-i-propoxide | 30 | 0.55 | Amorphous |
| Example 8 | 6.5 | $Li_2SiO_3$ | Present | $CaO_x$ | 2 | Ca-i-propoxide | 30 | 0.55 | Amorphous |
| Example 9 | 6.5 | $Li_2SiO_3$ | Present | $CaO_x$ | 2 | Ca-methoxide | 30 | 0.55 | Amorphous |
| Example 10 | 6.5 | $Li_2SiO_3$ | Present | $AlO_x$ | 2 | Al-tert butoxide | 30 | 0.55 | Amorphous |
| Example 11 | 6.5 | $Li_2SiO_3$ | Present | $AlO_x$ | 2 | Al-n-butoxide | 30 | 0.55 | Amorphous |
| Example 12 | 6.5 | $Li_2SiO_3$ | Present | TiOx | 2 | Ti-tert-butoxide | 30 | 0.55 | Amorphous |
| Example 13 | 6.5 | $Li_2SiO_3$ | Present | TiOx | 2 | Ti-n-butoxide | 30 | 0.55 | Amorphous |

| | Median Diameter ($\mu$m) | Li Silicate | Li compound different from Li Silicate (Li, C, O compound) | Metal Oxide | Film Thickness of Metal Oxide and/or Metal Hydroxide (nm) | Starting Material | Carbon Layer (nm) | Peak Intensity ratio of Si (111) to $Li_2SiO_3$ (111) in XRD (A/B) | Si (111) |
|---|---|---|---|---|---|---|---|---|---|
| Example 14 | 6.5 | $Li_2SiO_3$ | Present | $NbO_x$ | 2 | Nb-i-propoxide | 30 | 0.55 | Amorphous |
| Example 15 | 6.5 | $Li_2SiO_3$ | Present | $NbO_x$ | 2 | Nb-n-butoxide | 30 | 0.55 | Amorphous |
| Example 16 | 6.5 | $Li_2SiO_3$ | Present | Absent | 0 | | 30 | 0.55 | Amorphous |
| Example 17 | 6.5 | $Li_2SiO_3$ | Present | Absent | 0 | | 30 | 0.55 | Amorphous |
| Example 18 | 6.5 | $Li_2SiO_3$, $Li_6Si_2O_7$ | Present | Absent | 0 | | 30 | 0.55 | Amorphous |

[Table 2]

| | Median Diameter (μm) | Li Silicate | Li compound different from Li Silicate (Li, C, O compound) | Metal Oxide | Film Thickness of Metal Oxide and/or Metal Hydroxide (nm) | Starting Material | Carbon Layer (nm) | Peak Intensity Ratio of Si (111) to $Li_2SiO_3$ (111) in XRD (A/B) | Si (111) |
|---|---|---|---|---|---|---|---|---|---|
| Example 19 | 6.5 | $Li_2SiO_3$ | Present | $AlO_x$ | 0.1 | Al-sec butoxide | 30 | 0.55 | Amorphous |
| Example 20 | 6.5 | $Li_2SiO_3$ | Present | $AlO_x$ | 0.5 | Al-sec butoxide | 30 | 0.55 | Amorphous |
| Example 21 | 6.5 | $Li_2SiO_3$ | Present | $AlO_x$ | 1 | Al-sec butoxide | 30 | 0.55 | Amorphous |
| Example 22 | 6.5 | $Li_2SiO_3$ | Present | $AlO_x$ | 5 | Al-sec butoxide | 30 | 0.55 | Amorphous |
| Example 23 | 6.5 | $Li_2SiO_3$ | Present | $AlO_x$ | 10 | Al-sec butoxide | 30 | 0.55 | Amorphous |
| Example 24 | 6.5 | $Li_2SiO_3$ | Present | $AlO_x$ | 15 | Al-sec butoxide | 30 | 0.55 | Amorphous |
| Example 25 | 6.5 | $Li_2SiO_3$ | Present | $AlO_x$ | 2 | Al-sec butoxide | 30 | 1.67 | 9.2 nm |
| Example 26 | 6.5 | $Li_2SiO_3$ | Present | $AlO_x$ | 2 | Al-sec butoxide | 30 | 1.02 | 5nm |
| Example 27 | 6.5 | $Li_2SiO_3$ | Present | $AlO_x$ | 2 | Al-sec butoxide | 30 | 0.71 | 3.8 nm |
| Example 28 | 6.5 | $Li_2SiO_3$ | Present | $AlO_x$ | 2 | Al-sec butoxide | 30 | 0.67 | 2.2 nm |
| Example 29 | 6.5 | $Li_2SiO_3$ | Present | $AlO_x$ | 2 | Al-sec butoxide | 30 | 0.56 | 1.1 nm |
| Comparative Example 5 | 6.5 | $Li_2SiO_3$ | Present | $AlO_x$ | 2 | Al-sec butoxide | 0 | 0.55 | Amorphous |
| Example 30 | 4 | $Li_2SiO_3$ | Present | $AlO_x$ | 2 | Al-sec butoxide | 30 | 0.55 | Amorphous |
| Example 31 | 4.5 | $Li_2SiO_3$ | Present | $AlO_x$ | 2 | Al-sec butoxide | 30 | 0.55 | Amorphous |
| Example 32 | 5.5 | $Li_2SiO_3$ | Present | $AlO_x$ | 2 | Al-sec butoxide | 30 | 0.55 | Amorphous |
| Example 33 | 9 | $Li_2SiO_3$ | Present | $AlO_x$ | 2 | Al-sec butoxide | 30 | 0.55 | Amorphous |
| Example 34 | 12 | $Li_2SiO_3$ | Present | $AlO_x$ | 2 | Al-sec butoxide | 30 | 0.55 | Amorphous |
| Example 35 | 15 | $Li_2SiO_3$ | Present | $AlO_x$ | 2 | Al-sec butoxide | 30 | 0.55 | Amorphous |
| Example 36 | 17 | $Li_2SiO_3$ | Present | $AlO_x$ | 2 | Al-sec butoxide | 30 | 0.55 | Amorphous |

(continued)

| | Median Diameter (μm) | Li Silicate | Li compound different from Li Silicate (Li, C, O compound) | Metal Oxide | Film Thickness of Metal Oxide and/or Metal Hydroxide (nm) | Starting Material | Carbon Layer (nm) | Peak Intensity Ratio of Si (111) to Li$_2$SiO$_3$ (111) in XRD (A/B) | Si (111) |
|---|---|---|---|---|---|---|---|---|---|
| Comparative Example 6 | 6.5 | Absent | Absent | Absent | | | 30 | | Amorphous |

[Table 3]

| | Capacity retention ratio up to 500 Cy (%) | Slurry Stability | Initial Efficiency (%) |
|---|---|---|---|
| Comparative Example 1 | 75 | Stability 3 h (Gas generated 3 hours later) | 85 |
| Comparative Example 2 | 77 | Stability 12 h | 87 |
| Comparative Example 3 | 78 | Stability 7 h | 87 |
| Comparative Example 4 | 80 | Stability 45 h | 90 |
| Example 1 | 83 | Stability 72 h or more | 90.5 |
| Example 2 | 85 | Stability 61 h or more | 90.3 |
| Example 3 | 84 | Stability 72 h or more | 90.4 |
| Example 4 | 83 | Stability 72 h or more | 90.4 |
| Example 5 | 84 | Stability 72 h or more | 90.6 |
| Example 6 | 84 | Stability 72 h or more | 90.5 |
| Example 7 | 84 | Stability 72 h or more | 90.4 |
| Example 8 | 83 | Stability 72 h or more | 90.6 |
| Example 9 | 84 | Stability 72 h or more | 90.1 |
| Example 10 | 83 | Stability 72 h or more | 90 |
| Example 11 | 83 | Stability 72 h or more | 90.3 |
| Example 12 | 84 | Stability 72 h or more | 90.5 |
| Example 13 | 84 | Stability 72 h or more | 90.2 |
| Example 14 | 84 | Stability 72 h or more | 90.6 |
| Example 15 | 83 | Stability 72 h or more | 90.4 |
| Example 16 | 82 | Stability 60 h | 88 |
| Example 17 | 81 | Stability 48 h | 90 |
| Example 18 | 81 | Stability 52 h | 90 |
| Example 19 | 81 | Stability 60 h or more | 90.5 |
| Example 20 | 82 | Stability 72 h or more | 90.3 |
| Example 21 | 84 | Stability 72 h or more | 90.2 |
| Example 22 | 85 | Stability 100 h or more | 90.4 |
| Example 23 | 84 | Stability 100 h or more | 90.1 |
| Example 24 | 80 | Stability 72 h or more | 90.2 |

(continued)

| | Capacity retention ratio up to 500 Cy (%) | Slurry Stability | Initial Efficiency (%) |
|---|---|---|---|
| Example 25 | 80 | Stability 72 h or more | 90.3 |
| Example 26 | 81 | Stability 72 h or more | 90.3 |
| Example 27 | 82 | Stability 72 h or more | 90.3 |
| Example 28 | 83 | Stability 72 h or more | 90.4 |
| Example 29 | 83 | Stability 72 h or more | 90.4 |
| Comparative Example 5 | 78 | Stability 72 h or more | 90.1 |
| Example 30 | 80 | Stability 72 h or more | 90 |
| Example 31 | 83 | Stability 72 h or more | 90.2 |
| Example 32 | 84 | Stability 72 h or more | 90 |
| Example 33 | 85 | Stability 72 h or more | 90.8 |
| Example 34 | 86 | Stability 72 h or more | 90.4 |
| Example 35 | 84 | Stability 72 h or more | 90.3 |
| Example 36 | 81 | Stability 72 h or more | 90 |
| Comparative Example 6 | 65 | Stability 72 h or more | 65 |

Although not shown in Table 3, the negative electrode active materials of Examples 1 to 36 successfully realized higher capacity than that of a conventional carbon-based negative electrode active material.

[Observation of Negative Electrode Active Material Particles by XPS]

A structure of each negative electrode active material particle was observed using XPS/PHI Quantera II (manufactured by ULVAC-PHI, INCORPORATED) with measurements taken at each depth while dry-etching a surface.
Etching conditions were 30 minutes, an acceleration voltage of 2 kV, and an etching range of 2 mm $\times$ 2 mm.

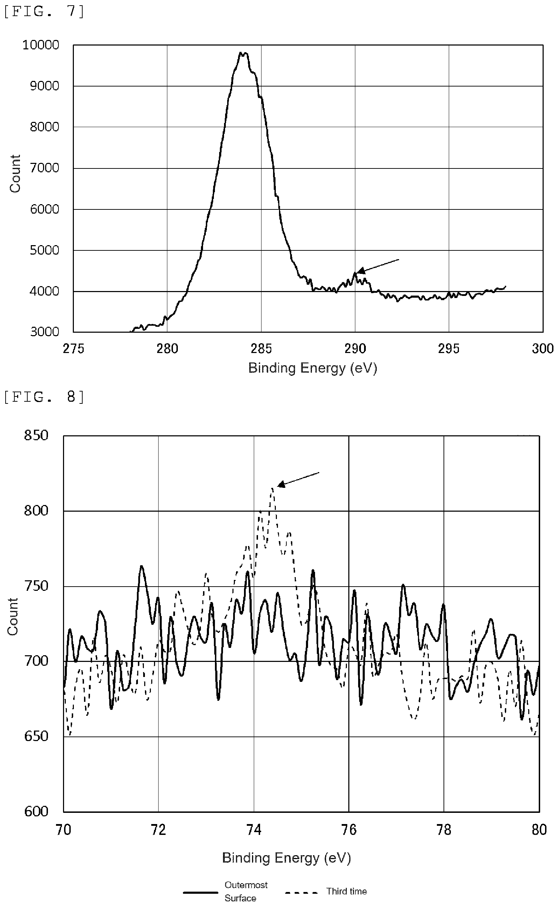

FIG. 7 shows a part of an XPS spectrum after performing etchings six times for the negative electrode active material particles contained in the negative electrode active material of Example 16.
The spectrum shown in FIG. 7 shows a plurality of peaks of C1s; a peak around 284 eV is the peak corresponding to a C-C structure, and a peak around 290 eV (indicated by an arrow) is the peak corresponding to an O-C=O structure. In addition, from the results of the same XPS observation, a peak corresponding to Li was confirmed in a binding energy region different from the binding energy region shown in FIG.7, thereby confirming presence of Li. That is, an intermediate layer of the negative electrode active material particles of the negative electrode active material of Example 16 contained Li compound having the O-C=O structure. Even from the XPS observation of the negative electrode active material particles contained in each negative electrode active material of Examples 1 to 15 and 17 to 36, the presence of a similar Li compound was confirmed. In Tables 1 and 2 described above, it is shown as present or absent of "Li, C, O compound".
Moreover, FIG. 8 shows each part of an XPS spectrum on the outermost surface (a solid line), and an XPS spectrum after performing etchings three times (a dashed line) of the negative electrode active material particles contained in the negative electrode active material of Example 1.
The spectrum in the dashed line shown in FIG. 8 has a peak around 74.4 eV (indicated by an arrow) that is not present in the spectrum in the solid line. This peak is corresponded to a peak of $AlO_x$. Moreover, according to the results of the XPS observation on the surface, presence of C was confirmed. Based on these results, it is found that a negative electrode active material contained in the negative electrode active material of Example 1 contains the outermost carbon layer and the underlying layer of aluminum oxide.
It was also confirmed that the negative electrode active material particles contained in each negative electrode active material of Examples 2 to 15 and 19 to 36 contain the outermost carbon layer and the underlying layer of the metal oxide.
Although not shown in Tables 1 and 2, in the intermediate layer of the negative electrode active material particles contained in the negative electrode active materials in Examples 1 to 33, the presence of the metal hydroxide was also successfully confirmed in addition to that of the metal oxide. This is considered to be due to the fact that the alkoxide was converted to the metal oxide by applying heat, but a part of the alkoxide remained inside as hydroxide. Therefore, in the metal oxide columns of Tables 1 and 2 above, a quantity of oxygen atoms relative to a metal element is denoted by "x".

This description encompasses the following aspects.

[1] A negative electrode active material containing negative electrode active material particles, in which the negative electrode active material particles include silicon compound particles containing Li silicate, an intermediate layer coating a surface of the silicon compound particles, the intermediate layer containing

a Li compound different from Li silicate, being adjacent to a portion of the surface of the silicon compound particles, and/or a metal oxide and/or a metal hydroxide, being adjacent to at least a portion of the surface of the silicon compound particles, and an outermost carbon layer coating the intermediate layer.

[2] The negative electrode active material according to [1], in which the silicon compound particles contain, at least in a part, at least one selected from the group consisting of $Li_2SiO_3$, $Li_4SiO_4$, and $Li_6Si_2O7$ as the Li silicate.

[3] The negative electrode active material according to [1] or [2], in which the intermediate layer contains the Li compound, and the Li compound is a composite compound containing Li, C, and O.

[4] The negative electrode active material according to [3], in which the composite compound containing Li, C, and O has an O-C=O structure, at least in a part, in a C1s waveform obtained by an XPS spectrum.

[5] The negative electrode active material according to any one of [1] to [4], in which the intermediate layer contains the metal oxide and/or the metal hydroxide, and the metal oxide and/or the metal hydroxide contains at least one element selected from the group consisting of aluminum, magnesium, titanium, zirconium, calcium, and niobium.

[6] The negative electrode active material according to [5], in which the metal oxide and/or the metal hydroxide in the intermediate layer has a thickness of 0.1 nm or more and 10 nm or less.

[7] The negative electrode active material according to any one of [1] to [6], in which the intermediate layer contains the Li compound and the metal oxide and/or the metal hydroxide, and the metal oxide and/or the metal hydroxide coats the Li compound.

[8] The negative electrode active material according to any one of [1] to [7], in which before the negative electrode active material particles are charged and discharged, the negative electrode active material particles have a peak attributed to a Si (111) crystal plane obtained by X-ray diffraction using Cu-Kα rays, a crystallite size corresponding to the crystal plane is 5.0 nm or less, and a ratio A/B of an intensity A of the peak attributed to the Si (111) crystal plane relative to an intensity B of a peak attributed to a $Li_2SiO_3$ (111) crystal plane satisfies the following formula (1).

$$0.4 \leq A/B \leq 1.0 \quad \cdots (1)$$

[9] The negative electrode active material according to any one of [1] to [8], in which the negative electrode active material particles have a median diameter of 4.5 μm or more and 15 μm or less.

[10] A method for producing negative electrode active material containing negative electrode active material particles, the method including the steps of: producing silicon oxide particles represented by a general formula $SiO_x$ ($0.5 \leq x \leq 1.6$); producing silicon compound particles containing Li silicate by inserting Li into the silicon oxide particles; forming an intermediate layer on a surface of the silicon compound particles, the intermediate layer containing a Li compound different from Li silicate, being adjacent to a portion of the surface of the silicon compound particles, and/or a metal oxide and/or a metal hydroxide, being adjacent to at least a portion of the surface of the silicon compound particles; forming an outermost carbon layer coating the intermediate layer to obtain negative electrode active material particles; and using the negative electrode active material particles to produce a negative electrode active material.

[11] The method for producing a negative electrode active material according to [10], in which in the step of producing the silicon compound particles containing the Li silicate, the silicon compound particles containing the Li compound on the surface are produced, and in the step of forming the intermediate layer, a portion of the Li compound existing on the surface of the silicon compound particles is removed, and then a portion of the surface of the silicon compound particles and a surface of the Li compound are coated with the metal oxide and/or the metal hydroxide, thereby forming the intermediate layer containing the metal oxide and/or the metal hydroxide and the Li compound.

[12] The method for producing a negative electrode active material according to [11], in which in the step of forming the intermediate layer, the metal oxide and/or the metal hydroxide is formed by hydrolysis and dehydration-condensation of a metal alkoxide.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

**Claims**

1. A negative electrode active material containing negative electrode active material particles, wherein the negative electrode active material particles comprise:

   silicon compound particles containing Li silicate;
   an intermediate layer coating a surface of the silicon compound particles, the intermediate layer containing

   a Li compound different from Li silicate, being adjacent to a portion of the surface of the silicon compound particles, and/or
   a metal oxide and/or a metal hydroxide, being adjacent to at least a portion of the surface of the silicon compound particles; and

   an outermost carbon layer coating the intermediate layer.

2. The negative electrode active material according to claim 1, wherein the silicon compound particles contain, at least in a part, at least one selected from the group consisting of $Li_2SiO_3$, $Li_4SiO_4$, and $Li_6Si_2O7$ as the Li silicate.

3. The negative electrode active material according to claim 1 or 2, wherein the intermediate layer contains the Li compound, and the Li compound is a composite compound containing Li, C, and O.

4. The negative electrode active material according to claim 3, wherein the composite compound containing Li, C, and O has an O-C=O structure, at least in a part, in a C1s waveform obtained by an XPS spectrum.

5. The negative electrode active material according to any one of claims 1 to 4, wherein the intermediate layer contains the metal oxide and/or the metal hydroxide, and the metal oxide and/or the metal hydroxide contains at least one element selected from the group consisting of aluminum, magnesium, titanium, zirconium, calcium, and niobium.

6. The negative electrode active material according to claim 5, wherein the metal oxide and/or the metal hydroxide in the intermediate layer has a thickness of 0.1 nm or more and 10 nm or less.

7. The negative electrode active material according to any one of claims 1 to 6, wherein the intermediate layer contains the Li compound and the metal oxide and/or the metal hydroxide, and the metal oxide and/or the metal hydroxide coats the Li compound.

8. The negative electrode active material according to any one of claims 1 to 7, wherein before the negative electrode active material particles are charged and discharged, the negative electrode active material particles have a peak attributed to a Si (111) crystal plane obtained by X-ray diffraction using Cu-K$\alpha$ rays, a crystallite size corresponding to the crystal plane is 5.0 nm or less, and a ratio A/B of an intensity A of the peak attributed to the Si (111) crystal plane relative to an intensity B of a peak attributed to a $Li_2SiO_3$ (111) crystal plane satisfies the following formula (1).

$$0.4 \leq A/B \leq 1.0 \quad \cdots (1)$$

9. The negative electrode active material according to any one of claims 1 to 8, wherein the negative electrode active material particles have a median diameter of 4.5 $\mu$m or more and 15 $\mu$m or less.

10. A method for producing negative electrode active material containing negative electrode active material particles, the method comprising the steps of:

    producing silicon oxide particles represented by a general formula $SiO_x$ ($0.5 \leq x \leq 1.6$);
    producing silicon compound particles containing Li silicate by inserting Li into the silicon oxide particles;

forming an intermediate layer on a surface of the silicon compound particles, the intermediate layer containing

a Li compound different from Li silicate, being adjacent to a portion of the surface of the silicon compound particles, and/or
a metal oxide and/or a metal hydroxide, being adjacent to at least a portion of the surface of the silicon compound particles;

forming an outermost carbon layer coating the intermediate layer to obtain negative electrode active material particles; and
using the negative electrode active material particles to produce a negative electrode active material.

11. The method for producing a negative electrode active material according to claim 10,

wherein in the step of producing the silicon compound particles containing the Li silicate, the silicon compound particles containing the Li compound on the surface are produced, and
in the step of forming the intermediate layer,
a portion of the Li compound existing on the surface of the silicon compound particles is removed, and then a portion of the surface of the silicon compound particles and a surface of the Li compound are coated with the metal oxide and/or the metal hydroxide, thereby forming the intermediate layer containing the metal oxide and/or the metal hydroxide and the Li compound.

12. The method for producing a negative electrode active material according to claim 11,
wherein in the step of forming the intermediate layer, the metal oxide and/or the metal hydroxide is formed by hydrolysis and dehydration-condensation of a metal alkoxide.

[FIG. 1]

[FIG. 2]

[FIG. 3]

[FIG. 4]

[FIG. 5]

[FIG. 6]

[FIG. 7]

[FIG. 8]

Outermost Surface　　- - - - Third time

## INTERNATIONAL SEARCH REPORT

| International application No. |
| --- |
| **PCT/JP2023/005085** |

**A.    CLASSIFICATION OF SUBJECT MATTER**

*H01M 4/58*(2010.01)i; *C01B 33/113*(2006.01)i; *C01B 33/32*(2006.01)i; *H01M 4/36*(2006.01)i
FI:    H01M4/58; H01M4/36 C; H01M4/36 A; C01B33/32; C01B33/113 A

According to International Patent Classification (IPC) or to both national classification and IPC

**B.    FIELDS SEARCHED**

Minimum documentation searched (classification system followed by classification symbols)

H01M4/58; C01B33/113; C01B33/32; H01M4/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021/153076 A1 (PANASONIC INTELLECTUAL PROPERTY MANAGEMENT CO., LTD.) 05 August 2021 (2021-08-05) claims, paragraphs [0010]-[0072], [0098]-[0141], examples, fig. 3 | 1, 5-6, 9 |
| A | | 2-4, 7-8, 10-12 |
| X | WO 2021/153075 A1 (PANASONIC INTELLECTUAL PROPERTY MANAGEMENT CO., LTD.) 05 August 2021 (2021-08-05) claims, paragraphs [0010]-[0072], [0098]-[0139], examples, fig. 3 | 1, 5-6, 9 |
| A | | 2-4, 7-8, 10-12 |
| Y | CN 108269979 A (HEFEI GUOXUAN HIGH-TECH POWER ENERGY CO., LTD.) 10 July 2018 (2018-07-10) claims, examples 2, 3, 5, 9, fig. 1, 3 | 1-2, 5-6, 9-10 |
| A | | 3-4, 7-8, 11-12 |
| Y | JP 4985949 B2 (SHIN-ETSU CHEMICAL CO., LTD.) 25 July 2012 (2012-07-25) paragraphs [0018], [0026]-[0028] | 1-2, 5-6, 9-10 |

☑ Further documents are listed in the continuation of Box C.　　☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 April 2023** | **09 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/005085**

**C.    DOCUMENTS CONSIDERED TO BE RELEVANT**

| Category* | Citation of document, with indication, where appropriate, of the relevant passages | Relevant to claim No. |
|---|---|---|
| Y | CN 112164779 A (CHANGSHA RESEARCH INSTITUTE OF MINING AND METALLURGY CO., LTD.) 01 January 2021 (2021-01-01)<br>    paragraph [0020] | 1-2, 5-6, 9-10 |
| A | JP 2015-95291 A (KABUSHIKI KAISHA TOYOTA JIDOSHOKKI) 18 May 2015 (2015-05-18) | 1-12 |
| A | JP 2017-10645 A (SHIN-ETSU CHEMICAL CO., LTD.) 12 January 2017 (2017-01-12) | 1-12 |

Form PCT/ISA/210 (second sheet) (January 2015)

**INTERNATIONAL SEARCH REPORT**
Information on patent family members

| | International application No. |
|---|---|
| | **PCT/JP2023/005085** |

| Patent document cited in search report | | | Publication date (day/month/year) | Patent family member(s) | | | Publication date (day/month/year) |
|---|---|---|---|---|---|---|---|
| WO | 2021/153076 | A1 | 05 August 2021 | EP 4099434 A1 claims, paragraphs [0010]-[0073], [0099]-[0144], examples, fig. 3 CN 115004404 A | | | |
| WO | 2021/153075 | A1 | 05 August 2021 | EP 4099437 A1 claims, paragraphs [0010]-[0074], [0100]-[0141], examples, fig. 3 CN 115023825 A | | | |
| CN | 108269979 | A | 10 July 2018 | (Family: none) | | | |
| JP | 4985949 | B2 | 25 July 2012 | US 2007/0224508 A1 paragraphs [0016], [0042]-[0044] CN 101047234 A KR 10-2007-0096933 A | | | |
| CN | 112164779 | A | 01 January 2021 | (Family: none) | | | |
| JP | 2015-95291 | A | 18 May 2015 | (Family: none) | | | |
| JP | 2017-10645 | A | 12 January 2017 | US 2018/0175377 A1 WO 2016/203696 A1 EP 3312916 A1 CN 107710466 A KR 10-2018-0019569 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A

- JP 2008177346 A
- JP 2007234255 A
- JP 2009212074 A
- JP 2009205950 A
- JP H06325765 A
- JP 2015156355 A
- JP 2017010645 A

**Non-patent literature cited in the description**

- *Denchi (battery)*, 01 May 2010, 10
- **A. HOHL** ; **T. WIEDER** ; **P. A. VAN AKEN** ; **T. E. WEIRICH** ; **G. DENNINGER** ; **M. VIDAL** ; **S. OSWALD** ; **C. DENEKE** ; **J. MAYER** ; **H. FUESS**. *J. Non-Cryst. Solids*, 2003, vol. 320, 255
- **V. KAPAKLIS**. *J. Non-Crystalline Solids*, 2008, vol. 354, 612
- **MARIKO MIYACHI** ; **HIRONORI YAMAMOTO** ; **HIDEMASA KAWAI**. *J. Electrochem. Soc.*, 2007, vol. 154 (4), A376-A380

- **M. YAMADA** ; **M. INABA** ; **A. UEDA** ; **K. MATSU-MOTO** ; **T. IWASAKI** ; **T. OHZUKU**. *J.Electrochem. Soc.*, 2012, vol. 159, A1630
- **TAEAHN KIM** ; **SANGJIN PARK** ; **SEUNG M. OH**. *J. Electrochem. Soc.*, 2007, vol. 154, A1112-A1117
- **HYE JIN KIM** ; **SUNGHUN CHOI** ; **SEUNG JONG LEE** ; **MYUNG WON SEO** ; **JAE GOO LEE** ; **ERHAN DENIZ** ; **YONG JU LEE** ; **EUN KYUNG KIM** ; **JANG WOOK CHOI**. *Nano Lett.*, 2016, vol. 16, 282-288